# EUROPÄISCHE PATENTSCHRIFT

(11) **EP 2 899 531 B1**
(45) Veröffentlichungstag und Bekanntmachung des Hinweises auf die Patenterteilung: **14.06.2017**
(21) Anmeldenummer: 14199168.7
(22) Anmeldetag: 19.12.2014
(51) Int. Cl.: G01N 21/19

(54) **Verfahren zur Detektion eines chiralen Analyten**
Method for detecting a chiral analytes
Procédé de détection d'un analyte chiral

(30) Priorität: 24.12.2013 DE 102013021899
(43) Veröffentlichungstag der Anmeldung: 29.07.2015
(73) Patentinhaber: Jacobs University Bremen gGmbH, 28759 Bremen (DE)
(72) Erfinder: Nau, Werner, 28759 Bremen (DE); Biedermann, Frank, 06110 Halle (DE)
(74) Vertreter: Weidner Stern Jeschke

(56) Entgegenhaltungen:
- GARIMA GHALE ET AL: "Determining Protease Substrate Selectivity and Inhibition by Label-Free Supramolecular Tandem Enzyme Assays", JOURNAL OF THE AMERICAN CHEMICAL SOCIETY, Bd. 133, Nr. 19, 18. Mai 2011 (2011-05-18) , Seiten 7528-7535, XP055185857, ISSN: 0002-7863, DOI: 10.1021/ja2013467
- YUAN ET AL: "Chiroptic behaviour of a chiral guest in an achiral cucurbit[7]uril host", TETRAHEDRON ASYMMETRY, PERGAMON PRESS LTD, OXFORD, GB, Bd. 18, Nr. 4, 22. März 2007 (2007-03-22), Seiten 483-487, XP005934167, ISSN: 0957-4166, DOI: 10.1016/J.TETASY.2007.02.009
- DAVID M. BAILEY ET AL: "Supramolecular Tandem Enzyme Assays for Multiparameter Sensor Arrays and Enantiomeric Excess Determination of Amino Acids", CHEMISTRY - A EUROPEAN JOURNAL, Bd. 14, Nr. 20, 7. Juli 2008 (2008-07-07), Seiten 6069-6077, XP055185862, ISSN: 0947-6539, DOI: 10.1002/chem.200800463
- FRANK BIEDERMANN ET AL: "Noncovalent Chirality Sensing Ensembles for the Detection and Reaction Monitoring of Amino Acids, Peptides, Proteins, and Aromatic Drugs", ANGEWANDTE CHEMIE INTERNATIONAL EDITION, Bd. 53, Nr. 22, 9. April 2014 (2014-04-09) , Seiten 5694-5699, XP055185860, ISSN: 1433-7851, DOI: 10.1002/anie.201400718

## Beschreibung

Die Erfindung betrifft ein Verfahren zur Detektion eines chiralen Analyten, mit dessen Hilfe nicht nur ein empfindlicher Nachweis von chiralen Analyten, sondern insbesondere auch die Verfolgung von Konzentrationsänderungen derselben, beispielsweise im Verlauf einer chemischen Reaktion, ermöglicht wird.

Die meisten biologischen Analyten sind chiral, im sichtbaren Spektrum jedoch transparent. Die Kombination eines chiralen Rezeptor mit einer chromogenen Signalgebungseinheit stand daher im Fokus bei der Suche nach supramolekularen Chemosensoren (s. [1]-[10]). Die Zugabe eines chiralen Analyten führt entweder zu einer direkten Bindung an einen chiralen chromophoren Rezeptor oder zur Verdrängung eines Indikatorfarbstoffes von einem chiralen synthetischen Wirt (s. [1], [2], [4-9]). Unabhängig davon, welcher Weg beschritten wird, bereitet das Design des stereodiskriminierenden Rezeptors die größte Schwierigkeit, insbesondere wenn die Detektion eines Analyten in Wasser erforderlich ist.

Supramolekulare Wirt-Gast-Komplexe von fassförmigen Cucurbituril-Makrozyklen sind im Stand der Technik bekannt (s. z.B. [23]-[27]), und sind auf ein breites Interesse hinsichtlich ihrer Anwendung bei Nachweisverfahren in wässriger Umgebung gestoßen ([28[-[31]). Der gleichzeitige Einschluss eines Farbstoffs und eines Analyten im Hohlraum von Cucurbit[8]uril (CB8) ist für den optischen Nachweis von aromatischen Kohlenwasserstoffen (s. [32]), Neurotransmittern (s. [33]) und Trp/Phe-haltigen Peptiden (s. [34]) eingesetzt worden. Circulardichroismus-Signale von chiralen CB8-Komplexen sind für eine verknüpfte Donor-Akzeptor-Dyade ([35]) und ein Cyclodextrin-Anthracen-Derivat als Gast (s. [36]) beschrieben worden. Lia Yuan, Ruibing Wang and Donal H. Macartney, Chiroptic behaviour of a chiral guest in an achiral cucurbit[7]uril host, Tetrahedron: Assymetry 18 (2007), 483-487, zeigt ein Verfahren zur Detektion eines chiralen Analyten mittels eines Cucurbituril-Gastmolekuls.

Aufgabe der vorliegenden Erfindung ist es, einen möglichst empfindlichen und einfachen Nachweis chiraler Analyten bereitzustellen.

Gelöst wird die Aufgabe durch den Gegenstand des Anspruchs 1. Zweckmäßige Ausgestaltungen der Erfindung sind in den abhängigen Ansprüchen angegeben.

In einem ersten Aspekt stellt die Erfindung ein Verfahren zur Detektion eines chiralen Analyten bereit, wobei der chirale Analyt eine aromatische Verbindung ist oder einen aromatischen Rest aufweist, umfassend die Schritte des
a. Inkontaktbringens des chiralen Analyten in wässriger Lösung mit einem achiralen supramolekularen Wirt-Gast-Komplex aus
   i. einem Cucurbituril gemäß Formel I 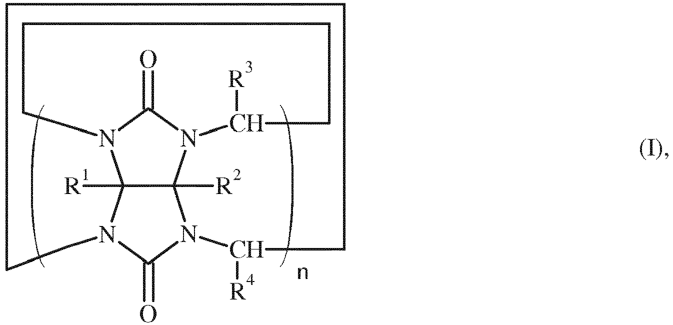 wobei
      n = 7, 8, 9, 10, 11, 12, 13, 14, 15, 16, 17, 18, 19 oder 20 ist,
      R¹, R², R³ und R⁴ unabhängig voneinander ausgewählt sind aus der Gruppe bestehend aus R, OH und COOR, und wobei
      R für jedes Vorkommen in Formel (I) jeweils unabhängig H oder ein substituierter oder unsubstituierter cyclischer, acyclischer, linearer oder verzweigter, substituierter oder unsubstituierter, aliphatischer oder aromatischer Rest ist, und
   ii. einem Farbstoff mit Bindungsaffinität zu dem Cucurbituril I unter Bildung eines chiralen supramolekularen Cucurbituril-Farbstoff-Analyt-Komplexes, und
b. Erstellens eines Circulardichroismus-Spektrums des chiralen supramolekularen Cucurbituril-Farbstoff-Analyt-Komplexes.

Die Grundidee der vorliegenden Erfindung besteht darin, ein achirales aus einem Farbstoff und einem Wirtsmolekül zusammengesetztes chemosensorisches Ensemble einzusetzen, das bei nicht-kovalenter, reversibler Bindung eines chiralen Analyten einen Circulardichroismus (CD) zeigt. Das erfindungsgemäße Verfahren ist dabei nicht auf die bloße Detektion von Analyten beschränkt, sondern kann auch zur Überwachung von Reaktionen verwendet werden, an denen der Analyt beteiligt ist. Darüber hinaus eignet sich das erfindungsgemäße Verfahren beispielsweise auch dazu, zur Sequenzermittlung von Peptiden oder zur Ermittlung eines Enantiomerenüberschusses in einem Enantiomerengemisch eingesetzt zu werden.

Die Erfindung macht sich das Phänomen des induzierten Circulardichroismus (ICD) zu Nutze. Dabei wird durch molekulare Wechselwirkung zwischen einer chiralen Verbindung und einer achiralen Partnerverbindung ein Circulardichroismus des achiralen Partners induziert. Die CD-Signale vieler chiraler Analyten, insbesondere von Aminosäuren, Peptiden, Proteinen und Kohlenhydraten sowie synthetischen Arzneimitteln, sind von Hause aus schwach und liegen im fernen UV-Bereich. In Gegenwart des achiralen Cucurbituril-Farbstoff-Komplexes entstehen aufgrund der Bildung eines chiralen Cucurbituril-Farbstoff-Analyt-Komplexes starke ICD-Signale. Dabei ist das optische Signal nicht nur stark verstärkt, sondern das Spektrum ist auch spezifisch für einen bestimmten Analyten, so dass dieser spezifisch nachweisbar ist. Darüber hinaus findet bei Auswahl eines geeigneten Farbstoffs eine Verschiebung des Spektrums in den bevorzugten Nah-UV oder sichtbaren Bereich statt.

Der induzierte Circulardichroismus ist in der Biochemie gut bekannt, zum Beispiel von der Wechselwirkung von Farbstoffen mit DNA ([11]) oder Proteinen ([12]) sowie aus der Polymerchemie ([13], [14]) und supramolekularen Chemie ([15], [16]). Studien mit chiralen Analyten und achiralen chromophoren Wirten ergaben detektierbare ICD-Effekte, waren jedoch meist auf organische Lösungsmittel beschränkt ([3], [17], [18]). Beispiele für ICD-Effekte in wässrigen Lösungen beinhalten Farbstoffe, die von Cyclodextrinen eingeschlossen sind, wobei die Wirte selbst als chirale Induktoren dienen ([19], [20]). Während die chiroptische Detektion durch chemische Reaktion oder Metall-Legierung von funktionellen Gruppen eines Analyten mit auxiliaren chromophoren Partnern einen erneuten Aufschwung erlebt ([2], [6], [8], [10]), umgeht die Induktion des circularen Dichroismus durch nicht-kovalente Wechselwirkungen von achiralen Analyten mit achiralen Rezeptoren beides, sowohl das Design von chiralen Wirten als auch die Bildung von kovalenten Addukten. Dadurch ergeben sich wichtige Vorteile.

Die Nutzung von ICD-Signalen gemäß der vorliegenden Erfindung bietet u.a. Den Vorteil, dass zwei Enantiomere voneinander unterschieden werden können, obwohl sie identische Affinitäten zu dem achiralen Rezeptor aufweisen, da sie entgegengesetzte ICD-Signale zeigen. ICD-Spektren sind darüber hinaus Analyt-spezifisch, obwohl sie nur schwer genau vorhergesagt werden können ([2], [21], [22]). Zusätzlich können Änderungen des ICD-Spektrums im Verlauf einer chemischen Reaktion leicht beobachtet werden, wobei Chiralität und Bindung des Reaktanden oder Produktes die einzigen Voraussetzungen sind.

Unter einem "chiralen Analyten" wird hier ein Analyt, d.h. eine nachzuweisende chemische Verbindung, mit Chiralität verstanden. Chiralität liegt bei einem Molekül dann vor, wenn das Molekül mit seinem Spiegelbild nicht zur Deckung gebracht werden kann. Ein Beispiel für Chiralität ist ein Molekül, bei dem ein Kohlenstoffatom, das Stereozentrum, vier verschiedene Substituenten trägt, wie in der folgenden Formel (II) dargestellt.

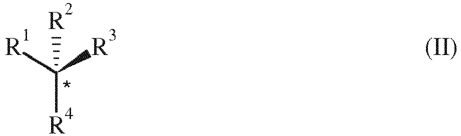

Unter einer "aromatischen Verbindung" wird hier eine organische Verbindung mit Aromatizität verstanden (s. [49]). Die Formulierung, wonach der chirale Analyt eine aromatische Verbindung ist oder einen aromatischen Rest aufweist, schließt nicht nur Analyten ein, die von Hause aus Aromaten sind oder von Hause aus eine aromatische Gruppe beinhalten, sondern auch solche Analyten, die durch Ankopplung eines aromatischen Restes, beispielsweise eines Phenylrestes, entsprechend modifiziert wurden. Ein Beispiel hierfür sind Kohlenhydrate, an die ein Phenylrest gebunden wurde (z.B. Phenyl-β-D-Glucose), oder auch Peptide, an die ein Phenylalanin- oder Tryptophanrest gebunden wurde. Es ist bevorzugt, dass ein aromatischer Rest derart sterisch zugänglich ist, dass eine nicht-kovalente Wechselwirkung mit dem Wirt (Cucurbituril) erfolgen kann. Dies ist insbesondere bei Peptiden mit einem Phenylalaninrest bevorzugt.

Der hier gegebenenfalls auch verwendete Begriff "chiraler aromatischer Analyt" schließt nicht nur Analyten ein, die eine aromatische Verbindung sind, sondern auch Analyten, die eine aromatischen Rest aufweisen.

Unter einem "Cucurbituril" wird hier eine Verbindung gemäß Formel I 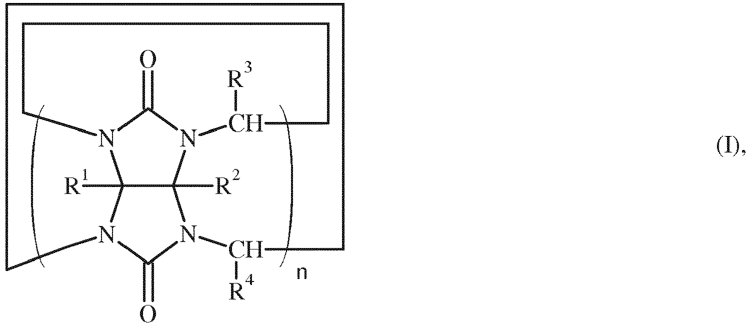 verstanden, wobei
n = 7, 8, 9, 10, 11, 12, 13, 14, 15, 16, 17, 18, 19 oder 20 ist,
R¹, R², R³ und R⁴ unabhängig voneinander ausgewählt sind aus der Gruppe bestehend aus R, OH und COOR, und wobei
R für jedes Vorkommen in Formel (I) jeweils unabhängig H oder ein substituierter oder unsubstituierter cyclischer, acyclischer, linearer oder verzweigter, substituierter oder unsubstituierter, aliphatischer oder aromatischer Rest ist. Cucurbiturile sind makrocyclische Moleküle, die derart aus mehreren miteinander verbundenen Glycoluril-Einheiten, oder Derivaten davon, zusammengesetzt sind, dass eine räumliche Struktur gebildet ist, die einem hohlen, oben und unten jeweils offenen Fass bzw. Kürbis ähnelt, und einen Hohlraum bildet, in den andere Moleküle aufgenommen und nicht-kovalent gebunden werden können. Häufig werden Cucurbiturile mit Cucurbit[n]uril (abgekürzt auch CB[n] oder CBn) bezeichnet, wobei n die Anzahl der sich wiederholenden Einheiten angibt. Ein Beispiel für ein Cucurbituril ist Cucurbit[8]uril (auch CB[8] oder CB8), CAS 259886-51-6. Cucurbiturile und Verfahren zu deren Herstellung sind beispielsweise in der WO 00/68232 A1, US 6365734 B1 und der DE 19603377 A1 beschrieben.

Unter einem "Wirt-Gast-Komplex" ("host-guest complex") wird hier ein selbstassemblierender supramolekularer Komplex aus zwei oder mehr Molekülen verstanden, bei dem mindestens eine als Gast ("guest") bezeichnete Verbindung zumindest teilweise in einen Hohlraum einer als Wirt ("host") bezeichneten Verbindung aufgenommen wird, wobei der Komplex durch nicht-kovalente Bindung(en) zusammen gehalten wird. Nicht-kovalente Bindungen schließen elektrostatische, dispersive (Van-der-Waals-) und hydrophobe Wechselwirkungen ein. Ein Beispiel ist ein Komplex aus einem Cucurbituril (Wirt) und einem Farbstoff (Gast). Der Begriff erfasst auch Fälle, bei denen mehrere Gäste, z.B. ein oder mehrere Farbstoffmoleküle und ein oder mehrere Analytmoleküle, vom Wirt aufgenommen sind.

Bereichsangaben wie beispielsweise "1-10" sind hier immer so zu verstehen, dass jeder Zwischenwert mit offenbart ist. Im Fall einer Angabe, die nur Ganzzahlen betreffen kann, wie beispielsweise eine Zahl von C-Atomen, bedeutet dies selbstverständlich, dass nur Ganzzahlen offenbart sind. Auch ein beliebiger kleinerer Bereich aus dem Bereich soll dabei mit offenbart sein, wobei unter dem kleineren Bereich auch Bereiche zu verstehen sind, die keinen der Grenzwerte des Bereichs umfassen.

Der Ausdruck "Cₙ-Cₘ", wobei n und m jeweils positive ganze Zahlen sind und m größer als n ist, bedeutet einen Bereich, der die Anzahl an C-Atomen einer Verbindung oder eines Restes angibt. Der Ausdruck soll hier ausdrücklich sämtliche ganzzahlige Zwischenwerte zwischen den Bereichsgrenzen n und m einschließen, und zwar jeweils unabhängig voneinander. Der Ausdruck "C₁-C₁₀" (n=1, m=10) bedeutet daher beispielsweise eine Verbindung, eine Gruppe oder einen Rest mit 1-10, d.h. 1, 2, 3, 4, 5, 6, 7, 8, 9 oder 10 C-Atomen. "C₁-C₁₀" umfasst daher gleichzeitig auch beispielsweise "C₂-C₆", d.h. 2, 3, 4, 5 oder 6 C-Atome, oder "C₁-C₄", d.h. 1, 2, 3 oder 4 C-Atome, oder "C₄-C₉", d.h. 4, 5, 6, 7, 8 oder 9 C-Atome. Entsprechend bedeutet der Begriff "C₂-C₁₀-Alkyl" beispielsweise eine Alkylgruppe mit 2, 3, 4, 5, 6, 7, 8, 9 oder 10 C-Atomen und umfasst sämtliche Kombinationen aus den Werten von n und m, die in dem Bereich von n=2 bis m=10 liegen, z.B. "C₅-C₇-Alkyl", d.h. ein Alkyl mit 5, 6 oder 7 C-Atomen.

Der Begriff "Alkyl" beinhaltet gesättigte aliphatische (nicht-aromatische) Gruppen, einschließlich geradkettiger Alkylgruppen (z.B. Methyl, Ethyl, Propyl, Butyl, Pentyl, Hexyl, Heptyl und Octyl) und verzweigtkettiger Alkylgruppen (z.B. Isopropyl, tert-Butyl, Isobutyl). Der Begriff umfasst auch O-, N-, S- oder P-Alkylgruppen (z.B. -O-Methyl), d.h. Alkylgruppen, die über ein Sauerstoff-, Stickstoff-, Schwefel- oder Phosphoratom an eine Verbindung gebunden sind.

Der Begriff "alkenyl" beinhaltet ungesättigte aliphatische (nicht-aromatische) Gruppen mit mindestens einer C-C-Doppelbindung, einschließlich geradkettiger und verzweigtkettiger Alkenylgruppen. Der Begriff umfasst auch O-, N-, S- oder P-Alkenylgruppen (z.B. -O-Propenyl), d.h. Alkenylgruppen, die über ein Sauerstoff-, Stickstoff-, Schwefel- oder Phosphoratom an eine Verbindung gebunden sind. Der Begriff "C₂-C₁₀-Alkenyl" bedeutet eine Alkenylgruppe mit 2, 3, 4, 5, 6, 7, 8, 9 oder 10 C-Atomen.

Der Begriff "Alkinyl" beinhaltet ungesättigte aliphatische (nicht-aromatische) Gruppen mit mindestens einer C-C-Dreifachbindung, einschließlich geradkettiger und verzweigtkettiger Alkenylgruppe. Der Begriff umfasst auch O-, N-, S- oder P-Alkinylgruppen (z.B. -O-Butinyl), d.h. Alkinylgruppen, die über ein Sauerstoff-, Stickstoff-, Schwefel- oder Phosphoratom an eine Verbindung gebunden sind. Der Begriff "C₂-C₁₀-Alkinyl" bedeutet eine Alkinylgruppe mit 2, 3, 4, 5, 6, 7, 8, 9 oder 10 C-Atomen.

Der Begriff "Alkeninyl" beinhaltet ungesättigte aliphatische (nicht-aromatische) Gruppen mit mindestens einer C-C-Doppelbindung und mindestens einer C-C-Dreifachbindung, einschließlich geradkettiger und verzweigtkettiger Alkeninylgruppen. Der Begriff umfasst auch O-, N-, S- oder P-Alkeninylgruppen, d.h. Alkeninylgruppen, die über ein Sauerstoff-, Stickstoff-, Schwefel- oder Phosphoratom an eine Verbindung gebunden sind. Der Begriff "C₄₋₁₀-Alkeninyl" bedeutet eine Alkeninylgruppe mit 4, 5, 6, 7, 8, 9 oder 10 C-Atomen.

Der Begriff "Cycloalkyl" beinhaltet alizyklische Gruppen, d.h. ringförmige gesättigte aliphatische (nicht-aromatische) Gruppen, z.B. Cyclopropyl, Cyclopentyl, Cyclohexyl, Cycloheptyl, Cyclooctyl. Der Begriff umfasst auch O-, N-, S- oder P-Cycloalkylgruppen, d.h. Cycloalkylgruppen, die über ein Sauerstoff-, Stickstoff-, Schwefel- oder Phosphoratom an eine Verbindung gebunden sind. Die Begriffe "Cycloalkenyl", "Cycloalkinyl" und "Cycloalkeninyl" bedeuten entsprechend ringförmige aliphatische (nicht-aromatische) Alkenyle, Alkinyle oder Alkeninyle gemäß der obigen Definition, wobei die Doppel- und/oder Dreifachbindung(en) innerhalb oder außerhalb des Rings bzw. Ringsystems vorhanden sein kann (können).

Der Begriff "Heteroalkyl" bezeichnet Alkylgruppen, bei denen ein oder mehrere Kohlenstoffatome des Kohlenwasserstoffgerüsts durch andere Atome (Heteroatome), z.B. Sauerstoff-, Stickstoff-, Schwefel- oder Phosphoratome, ersetzt sind. Der Begriff umfasst auch O-, N-, S- oder P-Heteroalkylgruppen, d.h. Heteroalkylgruppen, die über ein Sauerstoff-, Stickstoff-, Schwefel- oder Phosphoratom an eine Verbindung gebunden sind. Der Begriff "Heteroalkyl" umfasst auch Cykcloalkyle, bei denen ein oder mehrere Kohlenstoffatome des Kohlenwasserstoffgerüsts durch andere Atome, z.B. Sauerstoff-, Stickstoff-, Schwefel- oder Phosphoratome, ersetzt sind. Unter den Begriffen "Heteroalkenyl", "Heteroalkinyl", "Heteroalkeninyl" werden entsprechend Alkenyle, Alkinyle und Alkeninyle sowie Cycloalkenyle, Cycloalkinyle und Cycloalkeninyle verstanden, bei denen ein oder mehrere Kohlenstoffatome des Kohlenwasserstoffgerüsts durch andere Atome (Heteroatome), z.B. Sauerstoff-, Stickstoff-, Schwefel- oder Phosphoratome, ersetzt sind. Der Begriff "C₁-C₁₀-Heteroalkyl" bedeutet eine Alkylgruppe mit 1, 2, 3, 4, 5, 6, 7, 8, 9 oder 10 C-Atomen und mindestens einem Heteroatom. Entsprechendes gilt auch für Heteroalkenyle, Heteroalkinyle und Heteroalkeninyle.

Unter "Aryl" werden Gruppen mit Aromatizität verstanden, einschließlich 5- und 6-gliedrigen aromatischen Einzelringgruppen sowie multizyklischen Systemen mit mindestens einem aromatischen Ring. Beispiele für Aryl-Gruppen beinhalten Benzol, Phenyl und Naphthalen. Der Begriff umfasst auch O-, N-, S- oder P-Arylgruppen, d.h. Arylgruppen, die über ein Sauerstoff-, Stickstoff-, Schwefel- oder Phosphoratom an eine Verbindung gebunden sind.

Unter "Heteroaryl" werden Aryl-Gruppen verstanden, die Heteroatome in der Ringstruktur aufweisen, bei denen also ein oder mehrere Kohlenstoffatome in der Ringstruktur durch andere Atome (Heteroatome) ersetzt sind, z.B. durch Sauerstoff-, Stickstoff-, Schwefel- oder Phosphoratome. Beispiele für Heteroaryle sind Pyrrol, Furan, Thiophen, Thiazol, Isothiazol, Imidazol, Triazol, Tetrazol, Pyrazol, Oxazol, Pyridin, Pyrazin, Pyridazin und Pyrimidin. Der Begriff beinhaltet auch multizyklische Aryl-Gruppen, z.B. bizyklische und trizyklische, z.B. Benzoxazol, Benzodioxazol, Benzothiazol, Benzoimidazol, Benzothiophen, Methylendioxyphenyl, Quinolin, Isoquinolin, Indol, Benzofuran, Purin oder Benzofuran. Der Begriff umfasst auch O-, N-, S- oder P-Heteroarylgruppen, d.h. Heteroarylgruppen, die über ein Sauerstoff-, Stickstoff-, Schwefel- oder Phosphoratom an eine Verbindung gebunden sind.

Der Begriff "substituiert" bedeutet, dass ein oder mehrere Substituenten vorhanden sind, die ein Wasserstoffatom an einem oder mehreren Kohlenstoffatomen des Kohlenwasserstoffgerüsts ersetzen. Beispiele für solche Substituenten sind Oxo-, Hydroxyl-, Phosphat-, Cyano-, Azido-und Aminogruppen, aber auch z.B. Halogene (z.B. F, Cl, Br, I), Alkyl, Cycloalkyl, Aryl und Heteroaryl.

Als chiraler aromatischer Analyt kommen Verbindungen in Frage, die mit dem achiralen supramolekularen Cucurbituril-Farbstoff-Komplex eine ausreichende Wechselwirkung eingehen können. Dies setzt beispielsweise eine ausreichende Affinität des Analyten zum Wirt bzw. Komplex voraus. Geeignet sind beispielsweise Analyten, die mit dem Cucurbituril-Farbstoff-Komplex eine Bindungskonstante Kₐ im Bereich von 10³-10⁶ M⁻¹ aufweisen.

Zwar ist es bei dem erfindungsgemäßen Verfahren bevorzugt, dass das Cucurbituril und der Farbstoff zunächst zur Bildung eines supramolekularen Komplexes miteinander in Kontakt gebracht werden, und anschließend der chirale Analyt zu diesem Komplex hinzugegeben wird, jedoch ist das Verfahren hierauf nicht beschränkt. Vielmehr ist es möglich, den Komplex auch zu dem achiralen Analyten hinzuzugeben oder alle Komponenten gleichzeitig zusammenzufügen.

In einer bevorzugten Ausführungsform des erfindungsgemäßen Verfahrens ist R für jedes Vorkommen in Formel (I) jeweils unabhängig voneinander ausgewählt aus der Gruppe bestehend aus H, substituiertem oder unsubstituiertem C₁₋₁₀-Alkyl, substituiertem oder unsubstituiertem C₂₋₁₀-Alkenyl, substituiertem oder unsubstituiertem C₂₋₁₀-Alkinyl, substituiertem oder unsubstituiertem C₄₋₁₀-Alkeninyl, substituiertem oder unsubstituiertem C₃₋₁₂-Cycloalkyl, substituiertem oder unsubstituiertem C₃₋₁₂-Cycloalkenyl, substituiertem oder unsubstituiertem C₅₋₁₂-Cycloalkinyl, substituiertem oder unsubstituiertem C₅₋₁₂-Cycloalkeninyl, substituiertem oder unsubstituiertem C₁₋₁₀-Heteroalkyl, substituiertem oder unsubstituiertem C₂₋₁₀-Heterolkenyl, substituiertem oder unsubstituiertem C₂₋₁₀-Heteroalkinyl, substituiertem oder unsubstituiertem C₄₋₁₀-Heteroalkeninyl, substituiertem oder unsubstituiertem C₅₋₁₂-Aryl, substituiertem oder unsubstituiertem C₃₋₁₂-Heteroaryl.

Die Formulierung wonach "R für jedes Vorkommen in Formel (I) jeweils unabhängig voneinander ausgewählt ist" bedeutet, dass R bei mehrfachem Auftreten in der Struktur gemäß Formel (I) jeweils unabhängig von den übrigen Resten R in der Struktur ist, und mit einem oder auch mehreren anderen Resten R identisch, aber auch verschieden davon sein kann. So kann R beispielsweise an einer Stelle H, an einer anderen Stelle ein Alkylrest, an einer weiteren Stelle ein anderer Alkylrest sein. Ein weiteres Beispiel wäre, dass R an zwei Stellen H und an zwei weiteren Stellen ein Alkylrest ist.

In einer weiter bevorzugten Ausführungsform des erfindungsgemäßen Verfahrens ist R für jedes Vorkommen in Formel (I) jeweils unabhängig voneinander ausgewählt aus der Gruppe bestehend aus H, substituiertem oder unsubstituiertem C₁₋₆-Alkyl, substituiertem oder unsubstituiertem C₂₋₆-Alkenyl, substituiertem oder unsubstituiertem C₂₋₆-Alkinyl, substituiertem oder unsubstituiertem C₄₋₈-Alkeninyl, substituiertem oder unsubstituiertem C₄₋₆-Cycloalkyl, substituiertem oder unsubstituiertem C₄₋₆-Cycloalkenyl, substituiertem oder unsubstituiertem C₅₋₈-Cycloalkinyl, substituiertem oder unsubstituiertem C₅₋₈-Cycloalkeninyl, substituiertem oder unsubstituiertem C₁₋₆-Heteroalkyl, substituiertem oder unsubstituiertem C₂₋₆-Heterolkenyl, substituiertem oder unsubstituiertem C₂₋₆-Heteroalkinyl, substituiertem oder unsubstituiertem C₄₋₈-Heteroalkeninyl, substituiertem oder unsubstituiertem C₅₋₁₀-Aryl, substituiertem oder unsubstituiertem C₃₋₁₀-Heteroaryl.

In einer besonders bevorzugten Ausführungsform des erfindungsgemäße Verfahrens sind R¹, R², R³ und R⁴ jeweils H, so dass eine Verbindung gemäß der nachfolgenden Formel (1a) gebildet ist 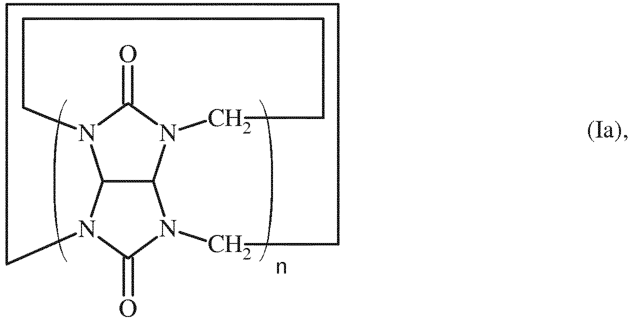 wobei n 7, 8, 9, 10, 11, 12, 13 oder 14, bevorzugt 7, 8 oder 9, besonders bevorzugt 8 ist. In letzterem Fall handelt es sich um das bereits erwähnte Cucurbit[8]uril (CB[8], CB8).

Als Farbstoff sind insbesondere stark absorbierende neutrale und kationische, bevorzugt di- und polykationische Farbstoffe mit starkem ICD-Signal geeignet, die eine hohe Bindungsaffinität zu und die Fähigkeit zur Selbstassemblierung mit dem Cucurbituril (I) aufweisen. Gegebenenfalls kann der Farbstoff auch über die Bildung von Rotaxanen an das Cucurbituril gebunden sein (s. [51]). Starke Änderungen der Absorptionsbanden, das Auftreten von Ladungstransfer-Banden oder starker Fluoreszenzsignale bei Bindung des Analyten sind dagegen nicht erforderlich, im Gegensatz zu bisherigen Ansätzen zur Verwendung von sensorischen Macrozyklus-Wirten (s. [1], [37], [38]). Geeignete Farbstoffe sind beispielsweise die dikationischen Farbstoffe 2,7-Dimethyldiazapyrenium (MDAP), N,N'-Dimethyl-2,9-diazaperopyrenium (MDPP) und trans-4,4'-(N,N'-Dimethylpyridinium)ethylen (MVE).

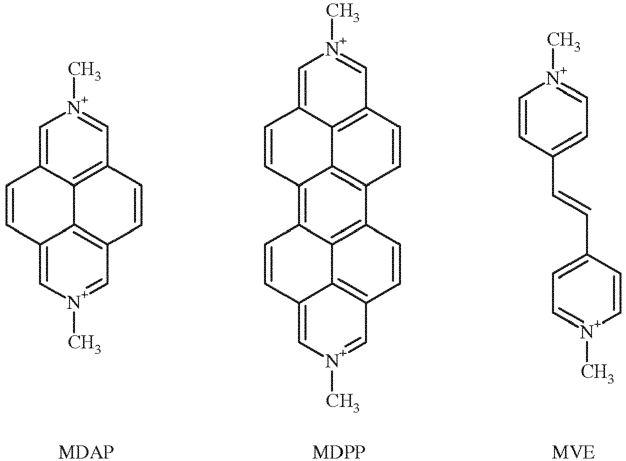

In einer Ausführungform des erfindungsgemäßen Verfahrens wird Schritt b) in Gegenwart eines mit dem Analyten direkt oder indirekt reagierenden Reaktanden zeitlich mehrfach hintereinander oder kontinuierlich durchgeführt und auf diese Weise eine Überwachung des Verlaufs einer Reaktion vorgenommen, bei der der chirale Analyt gebildet oder verbraucht wird. Diese Variante des erfindungsgemäßen Verfahrens ist geeignet, um beispielsweise eine Echtzeit-Überwachung bzw. -Verfolgung einer chemischen Reaktion vorzunehmen, an der ein chrialer aromatischer Analyt als Edukt oder Produkt beteiligt ist. Für die kontinuierliche Überwachung, beispielsweise in situ, wird der Cucurbituril-Farbstoff-Komplex mit in die Reaktionslösung gegeben, in der der chirale Analyt gebildet oder verbraucht wird, und die ICD-Messung erfolgt kontinuierlich direkt an dieser Reaktionslösung. Statt einer kontinuierlichen Messung kann auch von Zeit zu Zeit eine ICD-Messung an der Reaktionslösung vorgenommen werden.

Alternativ kann der chirale Analyt auch in einer Probe enhalten ist, die aus einer Reaktionslösung entnommen wird, in der eine Reaktion stattfindet, bei der der chirale Analyt gebildet oder verbraucht wird, wobei die Schritte a) und b) zeitlich mehrfach hintereinander durchgeführt werden und auf diese Weise eine Überwachung des Verlaufs der Reaktion vorgenommen wird. Bei dieser Variante wird in zeitlichen Abständen aus einer Reaktionslösung, in der der chirale Analyt durch eine chemische Reaktion gebildet oder verbraucht wird, eine Probe entnommen, und diese Probe wird zu einer separaten Lösung mit dem Cucurbituril-Farbstoff-Komplex zuzugeben, an der die ICD-Messungen vorgenommen werden.

In einer anderen Ausführungsform des erfindungsgemäßen Verfahrens ist der Analyt ein Enantiomer in einem Enantiomerengemisch. Da racemische Mischungen kein ICD-Signal produzieren und Enantiomere identische Bindungseigenschaften gegenüber dem achiralen Rezeptor (Cucurbituril + Farbstoff), jedoch gegensätzliche ICD-Effekte aufweisen, kann das erfindungsgemäße Verfahren zur Bestimmung eines Überschusses eines Enantiomers, z.B. im Falle eines chiralen Wirkstoffs als Arzneimittel, eingesetzt werden. Dies alleine ist bereits eine wichtige Anwendung des erfindungsgemäßen Verfahrens (s. [2], [43]).

In einer weiteren bevorzugten Ausführungsform ist der achirale supramolekulare Cucurbituril-Farbstoff-Komplex auf einer Oberfläche immobilisiert. Dies kann beispielsweise alleine über den Farbstoff (s. z.B. [52]), das Cucurbituril (s. z.B. [53]) oder beide geschehen. Auf diese Weise kann der achirale supramolekulare Cucurbituril-Farbstoff-Komplex als Chiralitätsdetektionsystem permanent auf eine Oberfläche aufgebracht werden, wodurch ein wiederholter und dauerhafter Einsatz des erfindungsgemäßen Verfahrens insbesondere auch im technischen Maßstab ermöglicht wird. Ein derartiges Chiralitätsdetektionsystem kann beispielsweise auch als CD-Detektor für chromatographische Verfahren (z.B. BPLC) eingesetzt werden, wodurch beispielsweise die Chiralität verschiedener Analyten auch in komplexen Mischungen im Durchfluss bestimmt werden kann.

Das erfindungsgemäße Verfahren ist auch vorteilhaft zur Sequenzbestimmung eines Proteins einsetzbar. In einem zweiten Aspekt betrifft die vorliegende Erfindung daher ein Verfahren zur Sequenzbestimmung eines Proteins, wobei das Protein in Peptide und/oder einzelne Aminosäuren gespalten wird und die Peptide und/oder Aminosäuren nach einem Verfahren gemäß dem ersten Aspekt der Erfindung detektiert werden. Es hat sich gezeigt, dass die Fragmentierung eines Proteins, beispielsweise durch enzymatischen Abbau, zu leicht detektierbaren ICD-Effekten führt und Peptidfragmente charakteristische CD-Spektren liefern. Dies kann genutzt werden, um mittels des erfindungsgemäßen Verfahrens nach dem ersten Aspekt der Erfindung, und gegebenenfalls unter Einsatz dem Fachmann bekannter Trennverfahren, auf die Struktur von Proteinen zu schließen. Gegebenenfalls ist hierfür die Modifikation von erzeugten Peptidfragmenten oder Aminosäuren, beispielsweise durch Anbringen aromatischer Gruppen, erforderlich. Gegenstand der Offenbarung ist auch ein Circulardichroismus-Spectropolarimeter, das zur Durchführung eines Verfahrens nach dem ersten Aspekt der Erfindung ausgestaltet und eingerichtet ist. Bevorzugt umfasst das erfindungsgemäße CD-Spectropolarimeter einen immobilisierten Cucurbituril-Farbstoff-Komplex, wie er oben für den ersten Aspekt der Erfindung beschrieben ist.

Die Erfindung wird im Folgenden allein zu Veranschaulichungszwecken anhand von Figuren und Ausführungsbeispielen näher erläutert. Es zeigt:

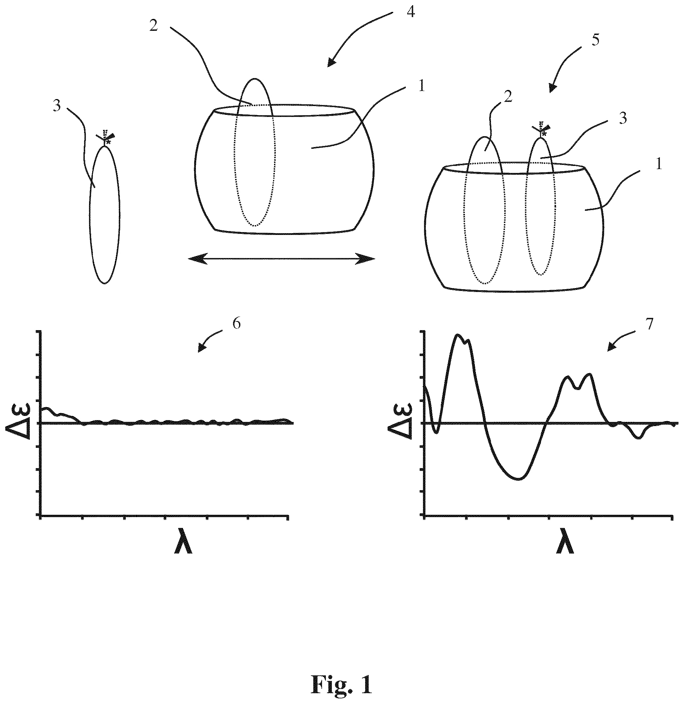

Fig. 1 Schematische Darstellung des Funktionsprinzips des erfindungsgemäßen Verfahrens.

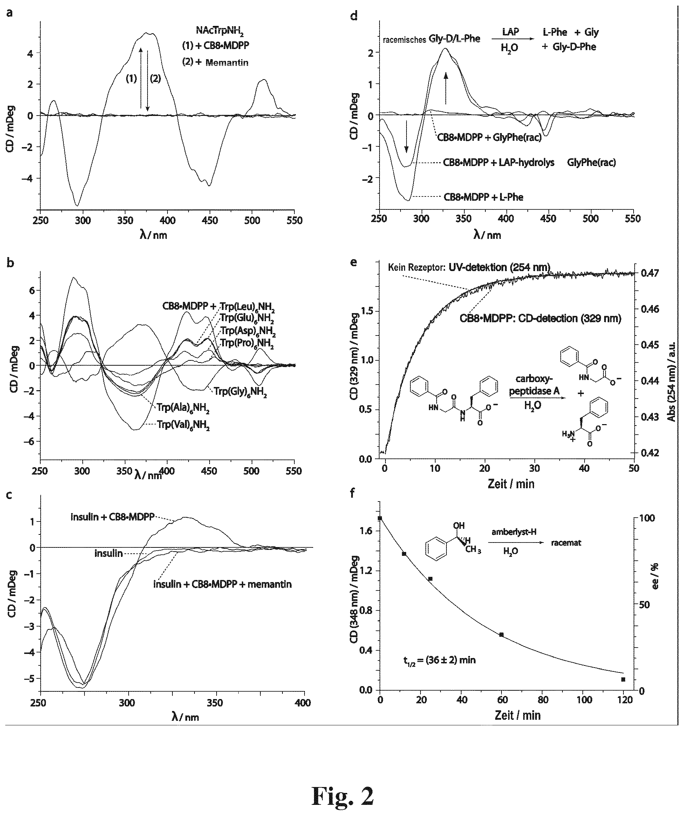

Fig. 2 Beispielhafte Anwendungen des erfindungsgemäßen Verfahrens. Dargestellt sind CD-Spektren für die Detektion einzelner Analyten sowie die Verfolgung von Reaktionsabläufen. 1a. CD-Spektren von NAcTrpNH₂ (40 µM) nach Zugabe von CB8-MDPP (20 µM in H₂O) und anschließender CB8-Sequestrierung durch Memantin als kompetitivem Bindemittel. 1b. CD-Spektren von CB8-MDPP (20 µM in H₂O) in Gegenwart verschiedener Trp(Xaa)₆NH₂-Heptapeptide (≥3 Äquiv.). 1c. CD-Spektren von Insulin (50 µM, pH 2,7) in Gegenwart von CB8-MDPP (20 µM) und anschließende Zerstörung des Rezeptor-Insulin-Komplexes durch Zugabe von Memantin (60 µM). 1d. CD-Spektren von CB8-MDPP (20 µM) in Gegenwart von racemischem Gly-D/L-Phe vor und nach dessen enzymatischer Hydrolyse durch Leucin-Aminopeptidase (LAP), bei pH 7,8. 1e. Kinetik für die Hydrolyse von HippurylPhe (160 µM) durch Carboxypeptidase A, bei pH 7,8. Der Reaktionsfortschritt wurde überwacht durch CD-Spektroskopie (329 nm) in Gegenwart von CB8-MDPP (20 µM) und, als Kontrolle, direkt durch UV/Vis (254 nm). 1f. Racemisierung von (S)-1-Phenylethanol (0,08 M in H₂O) mit Amberlyst-H bei 65 °C, überwacht durch Zugabe von Teilmengen der Reaktionsmischung (10 µL, 400 µM Endkonzentration) zu CB8-MVE (40 µM).

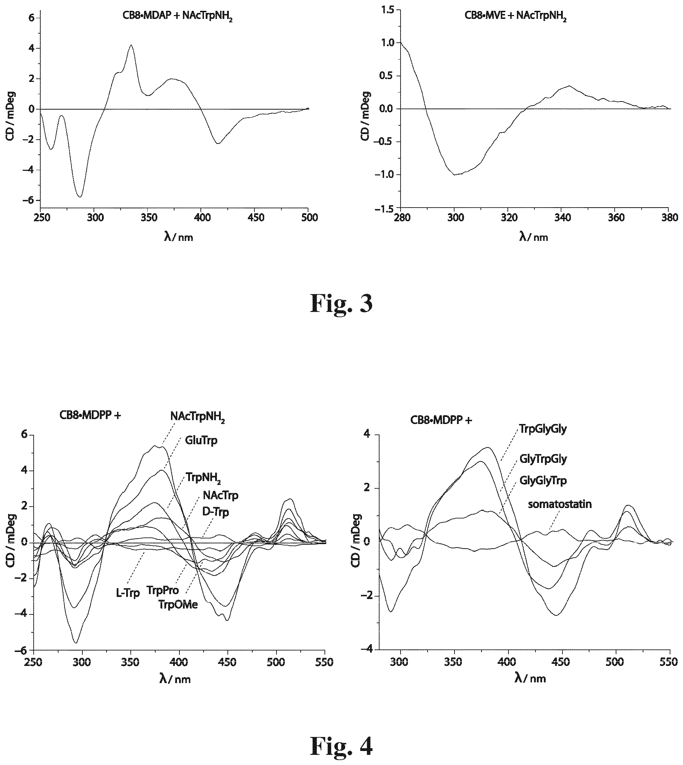

Fig. 3 CD-Spektrum für NAcTrpNH₂ (1,5 Äquiv.) in Wasser in Gegenwart von CB8-MDAP (100 µM, links) und CB8-MVE (40 µM, rechts).
Fig. 4 CD-Spektren von CB8-MDPP (20 µM in H₂O) in Gegenwart eines Überschusses verschiedener Tryptophan-Spezies zum Erhalt einer nahezu quantitativen Rezeptor-Komplexierung.

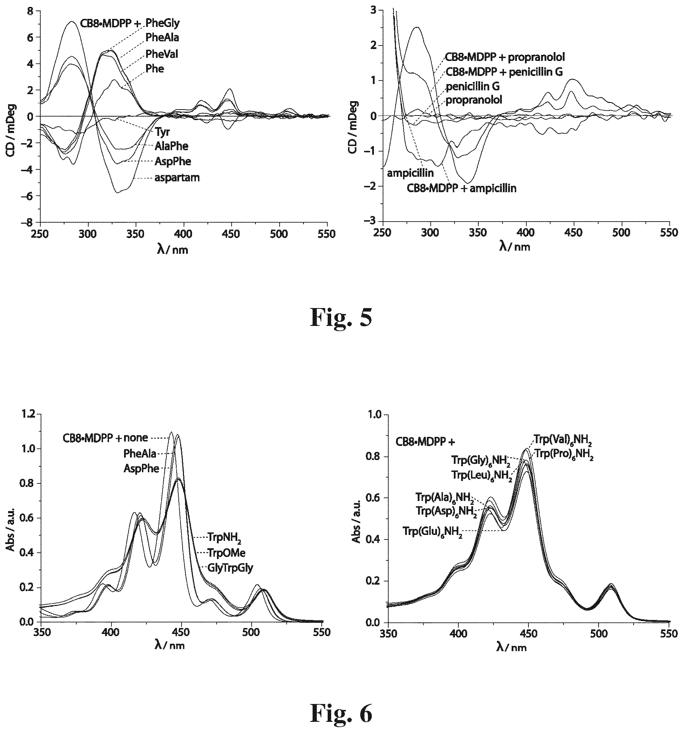

Fig. 5 Links: CD-Spektren von CB8-MDPP (20 µM in H₂O) in Gegenwart eines Überschusses verschiedener Phenylalanin-Derivate zum Erhalt einer nahezu quantitativen Rezeptor-Komplexierung. Rechts: CD-Spektren von CB8-MDPP (20 µM in H₂O) in Gegenwart der Arzneimittel Ampicillin (240 µM), Penicillin G (240 µM) und Propranolol (120 µM) zum Erhalt eines CB8-MDPP-Komplexierungsgrades von ungefähr 20 %, 20 % bzw. 77 %. Ebenfalls dargestellt sind die CD-Spektren der Arzneimittel vor Zugabe des Rezeptors CB8-MDPP.
Fig. 6 Links: UV/Vis-Spektren des CB8-MDPP-Rezeptor-Komplexes (20 µM, H₂O) in Gegenwart einiger aromatischer Analyten. Ein Überschuss von Analyt wurde verwendet, um eine quantitative Rezeptor-Komplexierung sicherzustellen. Die Phe-Spezies sind anhand charakteristischer UV/Vis-Eigenschaften leicht von Tryptophan-Analyten zu unterscheiden. Die weitere Unterscheidung der Phenylalanin- oder Tryptophan-Spezies untereinander ist jedoch durch UV/Vis-Messung nicht möglich. Rechts: UV/Vis-Spektren des CB8-MDPP-Rezeptor-Komplexes (20 µM, H₂O) in Gegenwart von Trp(Xaa)₆NH₂-Peptiden. Ein Überschuss von Peptid wurde verwendet, um eine quantitative Rezeptor-Komplexierung sicherzustellen. Die entsprechenden ICD-Spektren sind in Fig. 1b dargestellt.

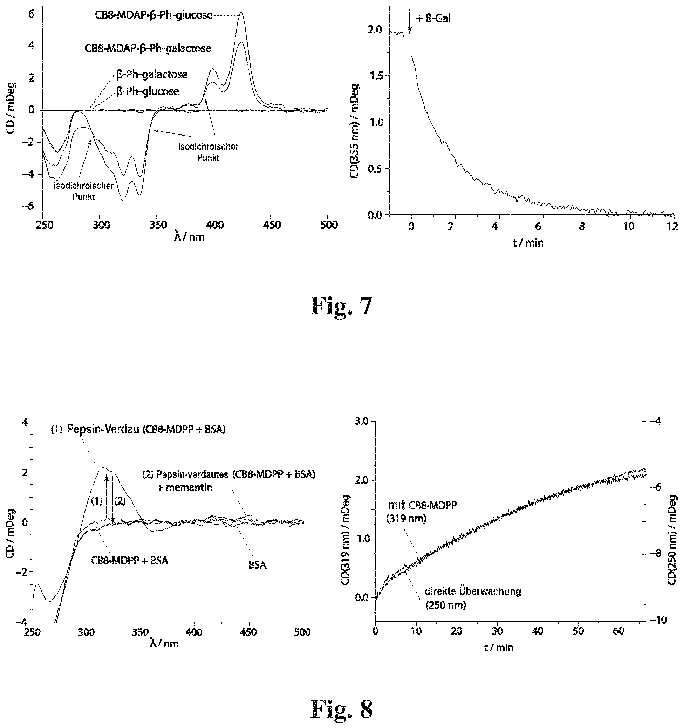

Fig. 7 ICD-Effekte für Kohlenhydratderivate und ein Enzymassay für β-Galaktosidase. Links: CD-Spektren von CB8-MDAP (100 µM in H₂O) in Gegenwart von β-Ph-Galactose und β-Ph-Glucose (jeweils 1,5 Äquiv.). Die CD-Achse wurde unter Verwendung der in Tab. 4 angegebenen Bindungskonstanten auf 100 % der Komplexierung von CB8-MDAP skaliert. Die CD-Spektren von β-Ph-Galactose und β-Ph-Glucose (jeweils 150 µM in H₂O) in Abwesenheit des Rezeptors sind ebenfalls wiedergegeben. Rechts: Kinetik für die durch β-Galaktosidase (β-Gal) katalysierte Hydrolyse von β-Ph-Galactose (250 µM) in Galactose und achirales Phenol in 10 mM Phosphatspuffer (pH 4,5). Der Reaktionsfortschritt wurde mit CB8-MDPP (20 µM) als Rezeptor verfolgt.
Fig. 8 ICD-Assay für BSA-Verdau. Links: CD-Spektren von Rinderserumsalbumin (BSA) (0,5 mg/Milliliter) in 10 mM Phosphatspuffer (pH 4) auf Zugabe von CB8-MDPP (20 µM) und anschließendem Verdau mit Pepsin (10 µg/mL) für 14 h. Nach Abschluss der Reaktion wurde Memantin (5 Äquiv.) zugegeben, um CB8 als einen 1:1-CB8-Memantin-Komplex zu sequestrieren, wodurch der Komplex zwischen MDPP und den aromatischen Resten der Peptidfragmente zerstört wird. Rechts: Die Anfangsgeschwindigkeiten der enzymatischen Hydrolyse wurde mittels CD-Spektroskopie in Anwesenheit von CB8-MDPP (20 µM) bei 319 nm verfolgt. Die Änderung des CD-Signals bei 250 nm in Abwesenheit des Rezeptors auf Pepsin-Verdau ist ebenfalls dargestellt.

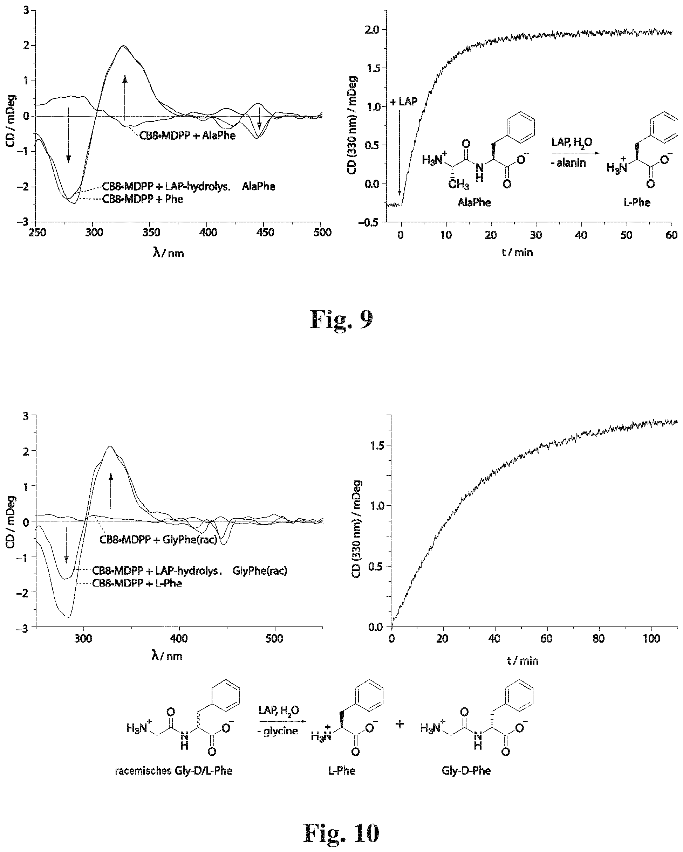

Fig. 9 ICD-Enzymassay für LAP. Links: CD-Spektren von CB8-MDPP (20 µM) in Gegenwart von AlaPhe (50 µM) in 10 mM Phosphatpuffer (pH 8), vor und nach dessen enzymatischer Hydrolyse mit Leucin-Aminopeptidase (LAP) (10 µl einer kommerziellen Mg²⁺-aktivierten Suspension). Das Spektrum eines CB8-MDPP-Phe-Komplexes ist zum Vergleich dargestellt. Rechts: Das kinetische Profil der enzymatischen Hydrolyse wurde durch CD Spektroskopie in Anwesenheit von CB8-MDPP (20 µM) bei 330 nm verfolgt.
Fig. 10 Links: CD-Spektren von CB8-MDPP (20 µM) in Gegenwart von racemischem Gly-L/D-Phe (50 µM) in 10 mM Phosphatpuffer (pH 8) vor und nach dessen enzymatischer Hydrolyse mit Leucin-Aminopeptidase (LAP) (10 µl einer kommerziellen, Mg²⁺-aktivierten Suspension). Das Spektrum eines CB8-MDPP-L-Phe-Komplexes ist zum Vergleich dargestellt. Rechts: Das kinetische Profil der enzymatischen Hydrolyse wurde durch CD-Spektroskopie in Anwesenheit von CB8-MDPP (20 µM) bei 330 nm verfolgt. Zu beachten ist, dass Phe eine 60fach stärkere Affinität für CB8-MDPP aufweist als GlyPhe (siehe Tab. 3), so dass der Großteil des CB8-MDPP-Komplexes nach (teilweisem) Abschluss der enzymatischen Hydrolyse durch L-Phe gebunden ist.

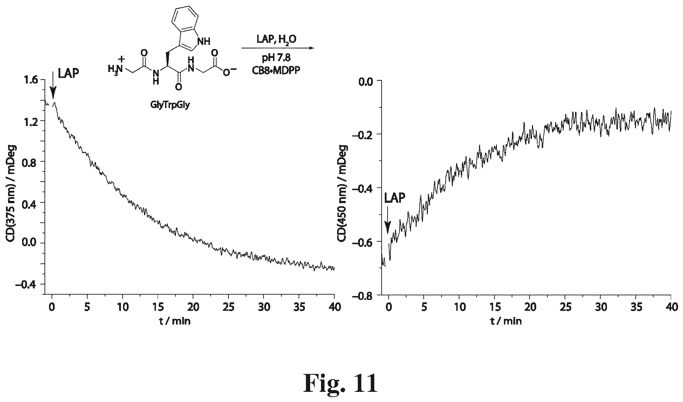

Fig. 11 Das kinetische Profil der enzymatischen Hydrolyse von GlyTrpGly (50 µM) mit LAP (10 µl einer kommerziellen Mg²⁺-aktivierten Suspension) in 10 mM Phosphatpuffer (pH 8) wurde durch CD-Spektroskopie in Anwesenheit von CB8-MDPP (20 µM) bei 375 nm (links) und 450 nm (rechts) verfolgt.

In Figur 1 ist das Prinzip des erfindungsgemäßen Verfahrens schematisch dargestellt. Ein chiraler Analyt 3 wird mit einem achiralen supramolekularen Wirt-Gast-Komplex 4 aus einem Cucurbituril 1 und einem Farbstoff 2 in einer wässrigen Lösung in Kontakt gebracht. Es bildet sich ein chiraler supramolekularer Wirt-Farbstoff-Analyt-Komplex 5. Der Analyt 3 allein zeigt kein charakteristisches ICD-Spektrum 6, während der chirale supramolekulare Wirt-Farbstoff-Analyt-Komplex 5 ein für den Analyten 3 spezifisches ICD-Spektrum 7 zeigt.

Es wurden Versuche mit selbstassemblierten Komplexen aus Cucurbit[8]uril, im Folgenden mit CB8 abgekürzt, den Farbstoffen MVE, MDAP und MDPP (s. oben) sowie den in Tabelle 1 aufgeführten optisch transparenten chiralen aromatischen Analyten durchgeführt. Der supramolekulare Komplex aus CB8 und Farbstoff (CB8-MVE, CB8-MDAP, CB8-MDPP) wird hier auch kurz als Rezeptor-Komplex oder Rezeptor bezeichnet.

**Tabelle 1: Chirale aromatische Analyten, die mit einem Rezeptor-Komplex aus CB8 und den Farbstoffen MVE, MDAP oder MDPP untersucht wurden.**

| Analyt | Struktur |
|---|---|
| Phe | 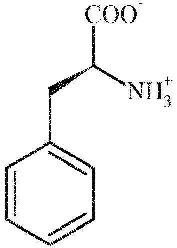 |
| PheGly: R = H | 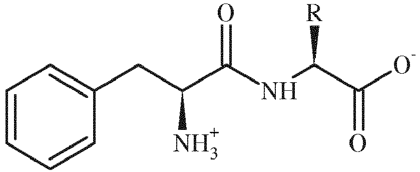 |
| PheAla: R = CH₃ | |
| PheVal: R = CH₂(CH₃)₂ | |
| GlyPhe: R = H AlaPhe: R = CH₃ | 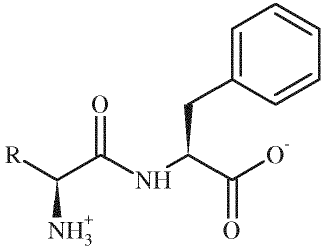 |
| AspPhe: R = O⁻ Aspartam: R = OCH₃ | 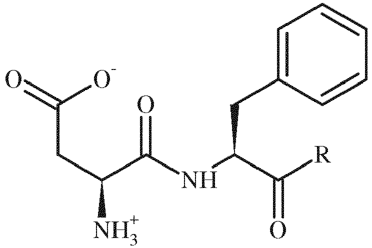 |
| HippurylPhe | 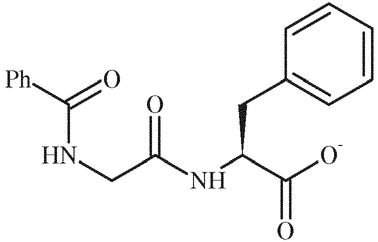 |
| Trp: R = O⁻ TrpOMe: R = OCH₃ TrpNH₂: R = NH₂ | 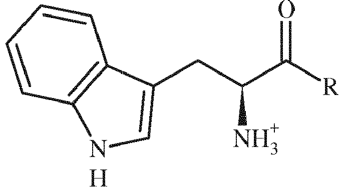 |
| NAcTrp: R = O⁻ NAcTrpNH₂: R = NH₂ | 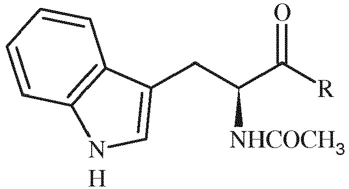 |
| TrpPro: n=1, R = O⁻ Trp(Pro)₆NH₂: n=6, R = NH₂ | 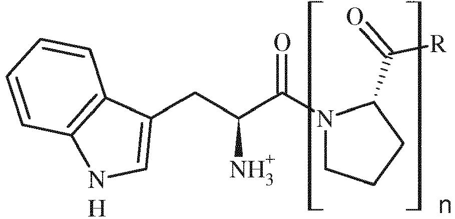 |
| TrpGlyGly | 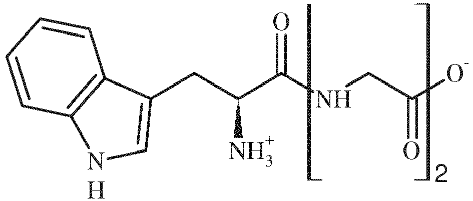 |
| GlyTrpGly | 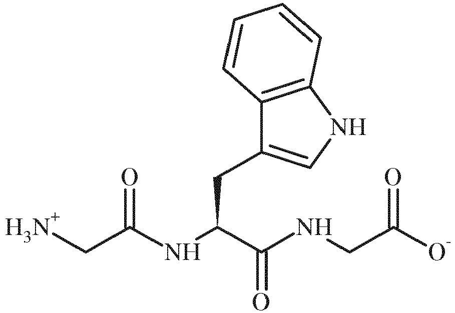 |
| GlyGlyTrp | 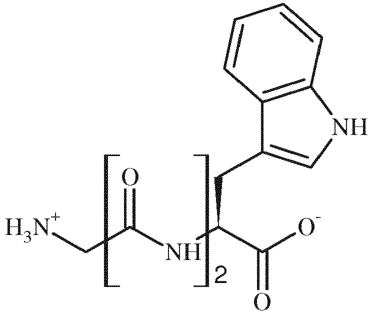 |
| Trp(Gly)₆NH₂: R=H Trp(Ala)₆NH₂: R=CH₃ Trp(Val)₆NH₂: R=CH(CH₃)₂ Trp(Leu)₆NH₂: R=CH₂CH(CH₃)₂ Trp(Glu)₆NH₂: R=CH₂CH₂CO₂⁻ | 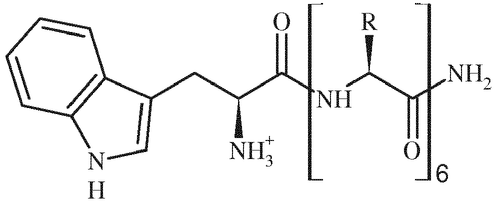 |
| GluTrp | 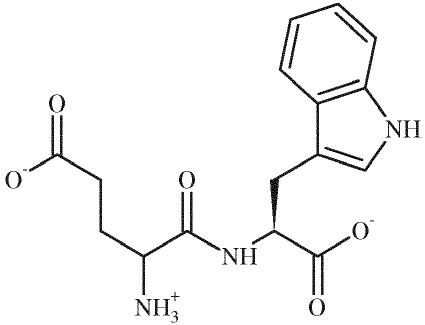 |
| Penicillin G: R = H Ampicillin: R = NH₃⁺ | 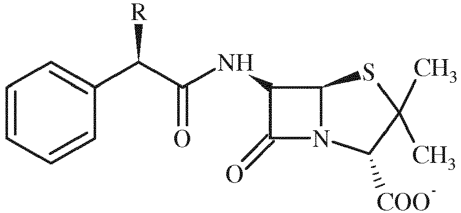 |
| (S)-1-Phenylethan-1-ol | 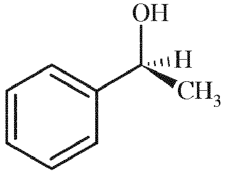 |
| (S)-Propranolol | 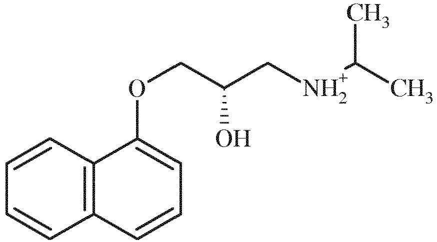 |
| β-Ph-Glucose: X=OH, Y=H β-Ph-Galaktose: X=H, Y=OH | 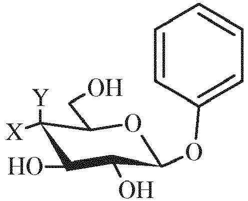 |
| Humaninsulin *Xaa* = bevorzugte Bindungsstellen; Xaa = andere mögliche Bindungsstellen | |
| Somatostatin ***Xaa*** = bevorzugte Bindungsstellen; Xaa = andere mögliche Bindungsstellen | |

CB8 wurde nach Literaturangaben hergestellt [24], kann aber auch von kommerziellen Anbietern (Sigma-Aldrich, Strem Chemicals Inc.) bezogen werden. MDPP wurde aus 1,3,8,10-Tetrahydro-2,9-dimethyl-2,9-diazadibenzo<cd,1m>perylen nach Literaturangaben (s. [47]) hergestellt. Gleichermaßen wurde im MDAP (s. [33]) nach Literaturangaben ([47]) aus 1,3,6,8-Tetrahydro-2,7-dimethyl-2,7-diazapyren hergestellt, wobei dem DDQ-Oxidationsverfahren für MDPP gefolgt wurde. MVE wurde ebenfalls nach Literaturangaben hergestellt ([48]).

¹H-NMR-Spektren wurden mittels des Spektrometers JEOL Oxford AS-400 (400 MHz) aufgezeichnet, UV/Vis-Spektren wurden mittels eines Varian Cary 4000 UV-Vis Spektrophotometers aufgezeichnet, und Fluoreszenzspektren wurden mit einem Cary Eclipse Spektralfluorometer aufgezeichnet. ICD-Spektren wurden mit einem Jasco J-720-Circular-Dichrographen aufgezeichnet (0,2 nm Auflösung, 20 Akkumulationen, 1-cm-Zelle). Blindmessungen von H₂O oder Puffer und Lösungen aus CB8-Farbstoff-Komplexen ergaben keine ICD-Effekte im untersuchten Bereich. Isotherme Titrationsexperimente wurden mit einem VIP-ITC der Microcal Inc. bei 25 °C in Wasser durchgeführt (s. auch [26]).

Die Farbstoffe MDAP, MDPP und MVE weisen eine hohe Bindungsaffinität zu CB8, Kompatibilität mit einer großen Anzahl von Analyten und starke ICD-Signale auf. Die Bindungskonstanten Kₐ von CB8 mit diesen Farbstoffen lagen im Bereich von ≥ 5 x 10⁵ M⁻¹, so dass eine hohes Maß an Wirt-Gast-Komplexierung mikromolaren Konzentrationen erreicht erreicht wurde (s. Tabelle 2).

**Tabelle 2: Thermodynamische Daten für die CB8-Farbstoff-Komplexbildung, bestimmt mittels ITC in H₂O bei 25 °C.**

| Farbstoff | K_{a,1} | ΔG | ΔH | -TΔS |
|---|---|---|---|---|
| | (10⁶ M⁻¹) | (kJ mol⁻¹) | (kJ mol⁻¹) | (kJ mol⁻¹) |
| MDPP | ≥1^{a} | ≤-34,2^{a} | -18,2 ± 1,0 | ≤-16,0^{a} |
| MDAP^{b} | 0,89 ± 0,02 | -34,0 ± 0,2 | n.v. | n.v. |
| MVE^{c} | 0,72 ± 0,03 | -33,2 ± 0,3 | -18,4 ± 1,0 | -14,8 ± 1,3 |

| | | | | |
|---|---|---|---|---|
| ^{a} Bindungskurve zu steil, daher ist lediglich der untere Kₐ-Grenzwert angegeben ^{b} Bestimmt durch UV/Vis-Titration, s. [33] c s. [26] n.v. = keine Daten vorhanden | | | | |

Bindungskonstanten zwischen CB8-Farbstoff-Komplexen und den in Tabelle 1 aufgeführten Analyten wurden mittels UV/Vis-Titration in H₂O, sofern nicht anders angegeben, durchgeführt. Zu einer Lösung aus dem CB8-Farbstoff-Rezeptor wurde schrittweise eine Lösung des Analyten gegeben, und die UV/Vis-Spektren wurden aufgezeichnet. Die normalisierte Absorption bei 419 nm (CB8-MDAP) oder bei 443 nm (CB8-MDPP) wurde mit einer Gleichung für eine 1:1-Bindung mittels der Kleinstquadratmethode angepasst ([50]). Die Bindungsaffinitäten sind in den Tabellen 3 und 4 wiedergegeben. Beachtenswert ist, dass die hohen Wirt-Farbstoff-Bindungsaffinitäten einer nahezu quantitativen Wirt-Farbstoff-Komplexierung entsprechen, so dass die anschließende Bindung des chiralen Analyten unabhängig behandelt werden kann.

**Tabelle 3: Bindungskonstanten und chiroptische Daten für Komplexe von CB8-MDPP (20 µM) mit chiralen Analyten in H₂O bei 22 °C**

| Chiraler Analyt | Kₐ / (10³ M⁻¹)^{a} | λ max / nm^{b} | Δε /(M⁻¹ cm⁻¹)^{c} |
|---|---|---|---|
| Trp | 1000 | 441 | -0,6 |
| | | 314 | 0,8 |
| TrpOMe | 1300 | 511 | 0,8 |
| | | 436 | -1,6 |
| TrpNH₂ | 3800 | 513 | 2,1 |
| | | 438 | -2,8 |
| | | 375 | 3,4 |
| NAcTrp | 100 | 513 | 1,8 |
| | | 442 | -1,6 |
| | | 384 | 2,2 |
| NAcTrpNH₂ | 210 | 513 | 3,6 |
| | 250^{d} | 449 | -6,8 |
| | | 379 | 8,0 |
| TrpPro | 430 | 510 | 1,5 |
| | | 430 | -2,3 |
| | | 369 | 1,3 |
| GluTrp | 210 | 512 | 3,0 |
| | | 447 | -5,4 |
| | | 383 | 6,1 |
| TrpGlyGly | 200 | 510 | 2,2 |
| | | 447 | -4,2 |
| | | 380 | 5,4 |
| GlyTrpGly | 5000 | 509 | 1,8 |
| | | 437 | -2,6 |
| | | 376 | 4,6 |
| GlyGlyTrp | 25 | 512 | 0,9 |
| | | 443 | -1,4 |
| | | 378 | 1,8 |
| Somatostatin | 17 | 447 | 1,2 |
| | | 365 | -1,0 |
| | | 305 | 1,7 |
| Phe | 450 | 445 | -1,6 |
| | | 328 | 4,6 |
| PheGly | 1900 | 324 | 7,7 |
| | | 277 | -4,2 |
| PheAla | 980 | 323 | 7,7 |
| PheVal | 1500 | 446 | -0,8 |
| | 1400^{d} | 323 | 6,9 |
| Gly-Phe (rac) | 7 | - | - |
| AlaPhe | 7 | 446 | 2,0 |
| | | 339 | -3,7 |
| AspPhe | 7 | 446 | 1,8 |
| | | 329 | -5,4 |
| Aspartam | 50 | 448 | 3,2 |
| | | 331 | -9,0 |
| Tyr | 9 | (291) | -2,0 |
| (S)-Propranolol | 25 | 448 | 2,2 |
| | | 340 | -3,7 |
| β-Ph-Glucose | 100 | 358 | 4,0 |
| β-Ph-Galactose | 25 | 358 | 3,9 |
| Penicillin G | < 1 | 445 | >5 |
| | | 330 | ≤-9 |
| Ampicillin | < 1 | 437 | ≤ -4 |
| | | 308 | ≤-11 |
| Insulin^{e} | 330 | 333 | 2,0 |

| | | | |
|---|---|---|---|
| ^{a} Aus UV/Vis-Titrationen, geschätzter Fehler ≤ 10% ^{b} Maxima von langen Wellenlängen (>300 nm) in ICD-Spektren ^{c} Extrapoliert zur quantitativen Rezeptorkomplexierung ^{d} Erhalten durch ICD-Titration ^{e} In 10 mM Phosphatpuffer (pH 2,7). | | | |

**Tabelle 4: Bindungskonstanten und chiroptische Daten für Komplexe von CB8-MDAP (100 µM) mit chiralen Analyten in H₂O bei 22 °C**

| Chiraler Analyt | Kₐ / (10³ M⁻¹)^{a} | λ max / nm^{b} | Δε /(M⁻¹ cm⁻¹)^{c} |
|---|---|---|---|
| Trp | 160 | 334 | -0,6 |
| TrpOMe | 14 | 334 | -0,7 |
| TrpNH₂ | 460 | 414 | -0,5 |
| | | 334 | 0,8 |
| NAcTrp | 50 | 424 | -0,4 |
| | | 384 | 0,3 |
| NAcTrpNH₂ | 110 | 416 | -0,8 |
| | | 377 | 0,7 |
| | | 336 | 1,4 |
| TrpPro | 50 | 410 | -0,3 |
| GluTrp | 25 | 418 | -1,0 |
| | | 380 | 0,8 |
| | | 340 | 1,0 |
| Phe | 4 | 343 | -0,5 |
| | | 314 | 0,9 |
| PheGly | 25 | 347 | -0,2 |
| | | 317 | 0,7 |
| PheAla | 12 | 347 | -0,4 |
| | | 317 | 1,0 |
| PheVal | 11 | 347 | -0,3 |
| | | 317 | 1,1 |
| AlaPhe | 0.5 | 425 | 0,4 |
| | | 319 | -0,7 |
| AspPhe | 0.8 | 425 | 0,5 |
| | | 322 | -1,2 |
| Aspartam | 0.8 | 425 | 0,8 |
| | | 324 | -1,9 |
| (S)-Propranolol | 3 | 321 | -1,3 |
| β-Ph-Glucose | 110 | 424 | 1,8 |
| | | 335 | -1,6 |
| β-Ph-Galactose | 50 | 424 | 1,3 |
| | | 335 | -1,2 |

| | | | |
|---|---|---|---|
| ^{a} Aus UV/Vis-Titrationen, geschätzter Fehler ≤ 10% ^{b} Maxima von langen Wellenlängen (>300 nm) in ICD-Spektren ^{c} Extrapoliert zur quantitativen Rezeptorkomplexierung | | | |

Die Bindungsaffinitäten der strukturell verschiedenartigen Analyten lagen im Bereich von 10³ bis 10⁶ M⁻¹, wodurch eine hochempfindliche Detektion ermöglicht wird. Die durch ICD-Titrationen ermittelten Bindungskonstanten bestätigten die durch UV/Vis-Messungen ermittelten. In allen Fällen fungiert CB8 als unverzichtbare Grundlage für die ICD-Effekte. Wie beispielsweise aus Figur 2 ersichtlich ist, eliminierte die Zerstörung des CB8-MDPP-NAcTrpNH₂-Rezeptor-Analyt-Komplexes durch Zugabe von Memantin, welches CB8 sequestriert (Kₐ ∼ 10¹¹ M⁻¹) den ICD-Effekt (Figur 2a). Wie erwartet, ergab ein anderer Reporter-Farbstoff, MDAP oder MVE, jeweils ein anderes ICD-Spektrum, jedoch bei gleichermaßen niedriger Analytenkonzentration (40-100 µM, im Vergleich zu 20 µM, s. Tabelle 4, Fig. 3).

Peptide, Dipeptide, Tripeptide und Hexpeptide mit N- oder C-terminalen Trp/Phe-Resten wurden untersucht. Es wurden bei mikromolaren Konzentrationen klar unterscheidbare ICD-Spektren erhalten (s. Fig. 2b, 4, 5 und Tabelle 3). Innere Phe-Reste werden lediglich schwach gebunden, innere Trp-Reste hingegen erzeugen charakteristische ICD-Signaturen (siehe Fig. 4 und Tab. 3). In der Tat ist ein einzelnes Trp für die Detektion von Peptiden ausreichend, wie zum Beispiel für das zyklische Peptidhormon Somatostatin gezeigt werden konnte (s. Fig. 4, rechts). Das ICD-Muster ist im Vergleich zu den Effekten für kleinere Modell-Peptide ausreichend charakteristisch (siehe Fig. 4 und Tab. 3), um das Trp anstelle der beiden Phe als bevorzugte Bindungsstellen im Somatostatin zu bestimmen. Diese Strukturinformation in Flüssigphase ist ansonsten nur durch NMR bei sehr viel höheren Konzentrationen erhältlich. Damit ist das erfindungsgemäße Verfahren auch zur Sequenzerkennung und Peptiderkennung mittels prinzipieller Komponenten- und Diskriminanzanalyse geeignet ([41]). Auch ohne solche Verfahren können N-terminal Trp-funktionalisierte Heptapeptide (s. Tabelle 1) leicht bei ≤ 50 µM voneinander unterschieden werden (siehe Figur 2b). Peptide beginnend mit TrpGly, TrpVal, TrpAsp und TrpPro zeigen charakteristische Cotton-Banden. Lediglich die Anfangssequenzen TrpAla, TrpGlu und TrpLeu führten zu sehr ähnlichen ICD-Spektren. Keines der Peptide oder deren Komplexe konnten mittels UV/Vis-Spektroskopie unterschieden werden (siehe Figur 6). Darüber hinaus waren die CD-Banden der Peptide ohne Rezeptor sehr schwach, uncharakteristisch und traten bei einer ungünstigen Detektionswellenlänge (λ <280 nm) auf.

Kohlenhydrate sind ebenfalls einer direkten Detektion oder Unterscheidung durch optische Spektroskopie nicht zugänglich. Unglücklicherweise binden sie in unmodifizierter Form auch nicht an die CB8-Farbstoff-Komplexe. Phenyl-β-D-Galactose und Phenyl-β-D-Glucose werden dagegen stark gebunden (Tabellen 3 und 4). Diese beiden Epimere zeigen identische UV/Vis-Spektren in Wasser. Selbst ihre CD-Spektren sind nahezu identisch. In Gegenwart des CB8-MDAP-Rezeptors jedoch können ihre starken ICD-Spektren mit gut definierten isodichroischen Punkten leicht unterschieden werden (siehe Figur 7). Bemerkenswert sind hierbei die ausgeprägten Effekte für die biomolekularen Analyten, obwohl die stereogenen Zentren selbst nicht tief in den Hohlraum des Wirtes eintauchen.

Die Kompatibilität des CB8-Farbstoff-Komplexes wurde auch mit Insulin getestet. Dieses Protein besitzt einen sterisch zugänglichen-terminalen Phe-Rest in seiner B-Kette, der den kleineren CB7-Wirt in einem Verhältnis 1:1 binden soll ([30]). Die sechs inneren Phe- oder Tyr-Reste sind nicht zugänglich. Die Zugabe des CB8-MDPP-Rezeptors zu Insulin (50 µM) führte zu einer sehr markanten ICD-Bande im nahen UV (Figur 2c, Tab. 3). Die Zerstörung des Rezeptor-Insulin-Komplexes durch Zugabe von Memantin verminderte die ICD-Banden, d.h. eine unspezifische kompetitive Bindung des Farbstoffs an das Protein findet nicht statt (Figur 2c). Als Negativkontrollen wurden Rinderserumsalbumin (BSA) und Lysozym untersucht. Hier wurden kein ICD-Effekte in Gegenwart des Rezeptors beobachtet, da sich die aromatischen Aminosäuren bei diesen (und den meisten anderen) Proteinen abgeschirmt in deren hydrophobem Kern befinden.

Außer zur Lieferung von strukturellen Informationen kann die CD-Spektroskopie auch zur Beobachtung chemischer Reaktionen, beispielsweise enzymatischer Umsetzungen, an denen chirale Metaboliten beteiligt sind, eingesetzt werden. Die oben beschriebenen verbesserten ICD-Effekte auf die verschiedenen Analyten können für die empfindliche, markierungsfreie Überwachung von deren Reaktionen in Echtzeit genutzt werden. Dieser wird ermöglicht durch die Tatsache, dass die nichtkovalente Bindung an den supramolekularen Rezeptor reversibel ist und schnelle Austauschkinetiken aufweist ([28]), wodurch sich das erfindungsgemäße Verfahren von alternativen chiroptischen Verfahren unter Einsatz von kovalenten Addukten ([2]) unterscheidet.

Die enzymatische Hydrolyse von Phenyl-β-D-Galactose durch β-D-Galactosidase wurde in situ beobachtet. Wie erwartet wurde die Spaltung in Phenol und Galactose von einer Abnahme des ICD-Signals begleitet, da der entstehende Rezeptor-Phenol-Komplex achiral ist (Figur 7). Obwohl BSA keinen ICD-Effekt zeigt (siehe oben), zerstört die Zugabe der Protease Pepsin dessen kompakte Tertiärstruktur, so dass die aromatischen Reste für den Rezeptor zugänglich werden. Diese strukturelle und chemische Änderung kann kontinuierlich durch die entstehenden ICD-Effekte mit dem Reporter-Paar überwacht werden (siehe Figur 8). Da die ICD-Muster der Peptide sequenzselektiv sind, können neuartige markierungsfreie Enzymtests entwickelt werden, an denen nach wie vor hoher Bedarf besteht, zum Beispiel für Exopeptidasen wie beispielsweise Carboxypeptidase A ([44]). Dieses Enzym spaltet bevorzugt C-terminale Phe-Reste, was beim Verdau des Modellsubstrats Hippuryl-Phe mittels des ICD-Assays direkt beobachtet werden konnte (Figur 2e). Gleichermaßen wurde Leucin-Aminopeptidase (LAP) erfolgreich eingesetzt zur Beobachtung des Peptidverdaus von z.B. AlaPhe in Ala und Phe (s. Figur 9) oder von GlyTrpGly, der sowohl im Nah-UV- als auch sichtbaren Bereich beobachtet wurde (siehe Figur 11).

Chirogenese kann ebenfalls leicht beobachtet werden. Beim Start mit einer racemischen Mischung eines Substrates in Gegenwart des achiralen chromophoren Rezeptors sollten durch die enantiospezifische Umsetzung ICD-Effekte entstehen. Tatsächlich erscheint das charakteristische ICD-Muster von L-Phe bei enzymatischem Verdau von racemischem Gly-D/L-Phe mit LAP, da nur das Gly-L-Phe-Dipeptid hydrolysiert wird (siehe Fig. 2d, Fig. 10).

Besonders vorteilhaft an dem erfindungsgemäßen Verfahren ist die Tatsache, dass es die Beobachtung jeder dieser enzymatischen Reaktionen im nahen UV oberhalb 310 nm ermöglicht, wodurch biologische Matrixeffekte aufgrund absorbierender und/oder CD-aktiver Verunreinigungen oder Additive umgangen werden können. Letztere können nicht vermieden werden, wenn im Stand der Technik bekannte Fern-UV-Assays eingesetzt werden, von denen einige hier auch als Kontrollen eingesetzt wurden, um die absoluten Kinetiken zu überprüfen, die mittels des erfindungsgemäßen ICD-Assays erhalten wurden (Figur 1e und Figur 8). Die Übereinstimmung zwischen beiden Assays bestätigte, dass die beiden Additive (Wirt und Farbstoff) die enzymatische Aktivität nicht stark beeinflussten.

Supramolekulare Tandem-Assays als zeitaufgelöste Varianten von Fluoreszenzindikator-Verdrängungsassays sind bekannt ([28], [38]). Die Verfolgung von racemischen Reaktionen oder die gegenseitige Umwandlung von zwei Enantiomeren durch diese Technik würde jedoch die Darstellung von chiralen Rezeptoren erfordern, wofür bislang jedoch noch kein praktikables Verfahren verfügbar ist ([28], [38]). Das erfindungsgemäße Verfahren ermöglicht die Verwendung von achiralen Wirt-Farbstoff-Paaren, um auf einfache Weise den Grad der Racemisierung festzustellen, wie beispielsweise in Figur 1f für eine heterogene Katalyse dargestellt ist. Eine Amberlyst-katalysierte Racemisierung wurde aufgrund ihrer industriellen Relevanz für die Isomerisierung von pharmazeutischen Bausteinen ([45]) als Prototyp-Reaktion ausgewählt. Statt die Racemisierung von (S)-1-Phenylethanol direkt in der Reaktionsmischung zu messen, wurden hier Teilmengen entnommen und in eine Küvette mit dem Wirt-Farbstoff-Komplex (hier CB8-MVE) gegeben. Der resultierende Abfall des ICD-Signals bei 348 nm kann direkt mit den Kinetiken der Racemisierungsreaktion korreliert werden, wodurch ein empfindlicheres Detektionswerkzeug als die direkte Messung von chiroptischen Substratseigenschaften bereitgestellt wird. Dies veranschaulicht, dass das Verfahren nicht auf enzymatische Racemisierungs- oder Enantionkonversionsreaktionen beschränkt ist.

Das auf einem selbst-assemblierten, achiralen Wirt-Farbstoff-Chemosensorensemble basierende erfindungsgemäße Verfahren ist sehr breit und vielfältig anwendbar und geeignet, geringe, beispielsweise mikromolare. Konzentrationen von wasserlöslichen achiralen Analyten mittels ICD-Effekten zu detektieren. Deren Stärke und die Tatsache, dass die spektrale Antwort vom Fern-UV zum Nah-UV oder sichtbaren Bereich verschoben wird, bietet wichtige praktische Vorteile, beispielsweise hinsichtlich der Empfindlichkeit. Das Verfahren kann mit vielen strukturell verwandten Analyten durchgeführt werden, insbesondere mit Analyten mit sterisch zugänglichen aromatischen Erkennungsmotiven. Es ist auf viele Biomoleküle sowie synthetische Arzneimittel anwendbar, und kann von der einfachen Detektion von Analyten auf die Sequenzerkennung von Peptiden und die Überwachung bzw. Verfolgung von enzymatischen und anderen katalytischen Reaktionen übertragen werden.

### Literatur

1. Mirsky, V. M. & Yatsimirsky., A. Artificial Receptors for Chemical Sensors. (Wiley-VCH, 2011).
2. Wolf, C. & Bentley, K. W. Chirality sensing using stereodynamic probes with distinct electronic circular dichroism output. Chem. Soc. Rev. 42, 5408-5424 (2013).
3. Hembury, G. A., Borovkov, V. V. & Inoue, Y. Chirality-Sensing Supramolecular Systems. Chem. Rev. 108, 1-73 (2007).
4. Pu, L. Fluorescence of Organic Molecules in Chiral Recognition. Chem. Rev. 104, 1687-1716 (2004).
5. Kubo, Y., Maeda, S., Tokita, S. & Kubo, M. Colorimetric chiral recognition by a molecular sensor. Nature 382, 522-524 (1996).
6. L. You, G. Pescitelli, E. V. Anslyn, L. Di Bari, J. Am. Chem. Soc., 2012, 134, 7117-7125.
7. Huang, W. H., Zavalij, P. Y. & Isaacs, L. Chiral recognition inside a chiral cucurbituril. Angew. Chem. Int. Ed. 46, 7425-7427 (2007).
8. Leung, D., Folmer-Andersen, J. F., Lynch, V. M. & Anslyn, E. V. Using enantioselective indicator displacement assays to determine the enantiomeric excess of alpha-amino acids. J. Am. Chem. Soc. 130, 12318-12327 (2008).
9. Galan, A., Andreu, D., Echavarren, A. M., Prados, P. & De Mendoza, J. A receptor for the enantioselective recognition of phenylalanine and tryptophan under neutral conditions. J. Am. Chem. Soc. 114, 1511-1512 (1992).
10. You, L., Berman, J. S. & Anslyn, E. V. Dynamic multi-component covalent assembly for the reversible binding of secondary alcohols and chirality sensing. Nat. Chem. 3, 943-948 (2011).
11. Allenmark, S. Induced circular dichroism by chiral molecular interaction. Chirality 15, 409-422 (2003).
12. Bertucci, C., Pistolozzi, M. & Simone, A. Circular dichroism in drug discovery and development: an abridged review. Anal. Bioanal. Chem. 398, 155-166 (2010).
13. Yashima, E., Maeda, K. & Okamoto, Y. Memory of macromolecular helicity assisted by interaction with achiral small molecules. Nature 399, 449-451 (1999).
14. Meudtner, R. M. & Hecht, S. Helicity Inversion in Responsive Foldamers Induced by Achiral Halide ion Guests. Angew. Chem. Int. Ed. 47, 4926-4930 (2008).
15. Kobayashi, K., Asakawa, Y., Kikuchi, Y., Toi, H. & Aoyama, Y. CH-.pi. interaction as an important driving force of host-guest complexation in apolar organic media. Binding of monools and acetylated compounds to resorcinol cyclic tetramer as studied by proton NMR and circular dichroism spectroscopy. J. Am. Chem. Soc. 115, 2648-2654 (1993).
16. Morozumi, T. & Shinkai, S. Induced circular dichroism detection of chiral ammonium guests through inclusion in calix[n]arene cavities. J. Chem. Soc., Chem. Commun. 1219-1220 (1994).
17. Inouye, M., Waki, M. & Abe, H. Saccharide-Dependent Induction of Chiral Helicity in Achiral Synthetic Hydrogen-Bonding Oligomers. J. Am. Chem. Soc. 126, 2022-2027 (2004).
18. Kikuchi, Y., Kobayashi, K. & Aoyama, Y. Molecular recognition. 18. Complexation of chiral glycols, steroidal polyols, and sugars with a multibenzenoid, achiral host as studied by induced circular dichroism spectroscopy: exciton chirality induction in resorcinol-aldehyde cyclotetramer and its use as a supramolecular probe for the assignments of stereochemistry of chiral guests. J. Am. Chem. Soc. 114, 1351-1358 (1992).
19. Shimizu, H., Kaito, A. & Hatano, M. Induced Circular Dichroism of β-Cyclodextrin Complexes with Substituted Benzenes. Bull. Chem. Soc. Jpn. 52, 2678-2684 (1979).
20. Zhang, X. & Nau, W. M. Chromophore Alignment in a Chiral Host Provides a Sensitive Test for the Orientation - Intensity Rule of Induced Circular Dichroism. Angew. Chem. Int. Ed. 39, 544-547 (2000).
21. Pescitelli, G., Di Bari, L. & Berova, N. Conformational aspects in the studies of organic compounds by electronic circular dichroism. Chem. Soc. Rev. 40, 4603-4625 (2011).
22. Mayer, B., Zhang, X., Nau, W. M. & Marconi, G. Co-conformational Variability of Cyclodextrin Complexes Studied by Induced Circular Dichroism of Azoalkanes. J. Am. Chem. Soc. 123, 5240-5248 (2001).
23. Masson, E., Ling, X. X., Joseph, R., Kyeremeh-Mensah, L. & Lu, X. Y. Cucurbituril chemistry: a tale of supramolecular success. R. Soc. Chem. Adv. 2, 1213-1247 (2012).
24. Kim, J. et al. New Cucurbituril Homologues: Syntheses, Isolation, Characterization, and X-ray Crystal Structures of Cucurbit[n]uril (n = 5, 7, and 8). J. Am. Chem. Soc. 122, 540-541 (2000).
25. Kim, H.-J. et al. Selective Inclusion of a Hetero-Guest Pair in a Molecular Host: Formation of Stable Charge-Transfer Complexes in Cucurbit[8]uril. Angew. Chem. Int. Ed. 40, 1526-1529 (2001).
26. Biedermann, F., Vendruscolo, M., Scherman, O. A., De Simone, A. & Nau, W. M. Cucurbit[8]uril and Blue-Box: High-Energy Water Release Overwhelms Electrostatic Interactions. J. Am. Chem. Soc. 135, 14879-14888 (2013).
27. Cheng, X.-J. et al. Twisted Cucurbit[14]uril. Angew. Chem. Int. Ed. 52, 7252-7255 (2013).
28. Hennig, A., Bakirci, H. & Nau, W. M. Label-free continuous enzyme assays with macrocycle-fluorescent dye complexes. Nat. Meth. 4, 629-632 (2007).
29. Ghale, G., Ramalingam, V., Urbach, A. R. & Nau, W. M. Determining Protease Substrate Selectivity and Inhibition by Label-Free Supramolecular Tandem Enzyme Assays. J. Am. Chem. Soc. 133, 7528-7535 (2011).
30. Chinai, J. M. et al. Molecular Recognition of Insulin by a Synthetic Receptor. J. Am. Chem. Soc. 133, 8810-8813 (2011).
31. Minami, T. et al. Multianalyte Sensing of Addictive Over-the-Counter (OTC) Drugs. J. Am. Chem. Soc. 135, 15238-15243 (2013).
32. Kasera, S., Biedermann, F., Baumberg, J. J., Scherman, O. A. & Mahajan, S. Quantitative SERS Using the Sequestration of Small Molecules Inside Precise Plasmonic Nanoconstructs. Nano Lett. 12, 5924-5928 (2012).
33. Sindelar, V. et al. Supramolecular Assembly of 2,7-Dimethyldiazapyrenium and Cucurbit[8]uril: A New Fluorescent Host for Detection of Catechol and Dopamine. Chem. Eur. J. 11, 7054-7059 (2005).
34. Ali, O. A., Olson, E. M. & Urbach, A. R. Effects of sequence context on the binding of tryptophan-containing peptides by the cucurbit[8]uril-methyl viologen complex. Supramol. Chem. 1-7 (2013).
35. Mori, T., Ko, Y. H., Kim, K. & Inoue, Y. Circular Dichroism of Intra- and Intermolecular Charge-Transfer Complexes. Enhancement of Anisotropy Factors by Dimer Formation and by Confinement. J. Org. Chem. 71, 3232-3247 (2006).
36. Yang, C. et al. Dual Supramolecular Photochirogenesis: Ultimate Stereocontrol of Photocyclodimerization by a Chiral Scaffold and Confining Host. J. Am. Chem. Soc. 133, 13786-13789 (2011).
37. Nguyen, B. T. & Anslyn, E. V. Indicator-displacement assays. Coord. Chem. Rev. 250, 3118-3127 (2006).
38. Dsouza, R. N., Hennig, A. & Nau, W. M. Supramolecular Tandem Enzyme Assays. Chem. Eur. J. 18, 3444-3459 (2012).
39. Ranjbar, B. & Gill, P. Circular Dichroism Techniques: Biomolecular and Nanostructural Analyses- A Review. Chem. Biol. Drug. Des. 74, 101-120 (2009).
40. Biedermann, F. & Scherman, O. A. Cucurbit[8]uril Mediated Donor-Acceptor Ternary Complexes: A Model System for Studying Charge-Transfer Interactions. J. Phys. Chem. B 116, 2842-2849 (2012).
41. Stewart, S., Ivy, M. A. & Anslyn, E. V. The use of principal component analysis and discriminant analysis in differential sensing routines. Chem. Soc. Rev. (2013).
42. Bickerton, G. R., Paolini, G. V., Besnard, J., Muresan, S. & Hopkins, A. L. Quantifying the chemical beauty of drugs. Nat. Chem. 4, 90-98 (2012).
43. Bailey, D. M., Hennig, A., Uzunova, V. D. & Nau, W. M. Supramolecular Tandem Enzyme Assays for Multiparameter Sensor Arrays and Enantiomeric Excess Determination of Amino Acids. Chem. Eur. J. 14, 6069-6077 (2008).
44. Hennig, A., Roth, D., Enderle, T. & Nau, W. M. Nanosecond Time-Resolved Fluorescence Protease Assays. ChemBioChem 7, 733-737 (2006).
45. House, D. W. Continuous racemization of benzylic alcohols, ethers, and esters by solid acid catalyst. USA patent (1994).
46. Ueno, A., Kuwabara, T., Nakamura, A. & Toda, F. A modified cyclodextrin as a guest responsive colour-change indicator. Nature 356, 136-137 (1992).
47. Basuray, A. N. et al. The Chameleonic Nature of Diazaperopyrenium Recognition Processes. Angew. Chem. Int. Ed. 51, 11872-11877 (2012).
48. Willner, I., Marx-tibbon, S., Cohen, S., Eichen, Y. & Kaftori, M. Supramolecular Donor-Acceptor Complexes of Dichlorofluorescein and cis- and trans-4,4'-(N,N'-dimethylpyridinium)ethylene. J. Phys. Org. Chem. 10, 435-444 (1997).
49. IUPAC. Compendium of Chemical Terminology, 2. Aufl. ("Gold Book"). Zusammengestellt von A. D. McNaught und A. Wilkinson. Blackwell Scientific Publications, Oxford (1997). Berichtigte XML-On-line-Version: http://goldbook.iupac.org (2006-), M. Nic, J. Jirat, B. Kosata; Updates zusammengestellt von A. Jenkins. ISBN 0-9678550-9-8. doi:10.1351/goldbook.
50. Bakirci H, Zhang,,X, Nau, WM., Induced Circular Dichroism and Structural Assignment of the Cyclodextrin Inclusion Complexes of Bicyclic Azoalkanes. J Org Chem 2004, 70(1): 39-46.
51. Vijayakumar Ramalingam and Adam R. Urbach Organic Letters 2011, 13, 4898-4901.
52. Qi An, Jurriaan Huskens, Sven Krabbenborg, Jan de Boer, Pascal Jonkheijm, Angewandte Chemie International Edition 2012, 51, 12233-12237).
53. Xiaoqun Zhu, Xiuwei Fan, Guannan Ju, Mengjiao Cheng, Qi An, Jun Nie and Feng Shi, Chem. Commun., 2013, 49, 8093-8095

## Patentansprüche

1. Verfahren zur Detektion eines chiralen Analyten, wobei der chirale Analyt eine aromatische Verbindung ist oder einen aromatischen Rest aufweist, umfassend die Schritte des
a. Inkontaktbringens des chiralen Analyten in wässriger Lösung mit einem achiralen supramolekularen Wirt-Gast-Komplex aus
i. einem Cucurbituril gemäß Formel I 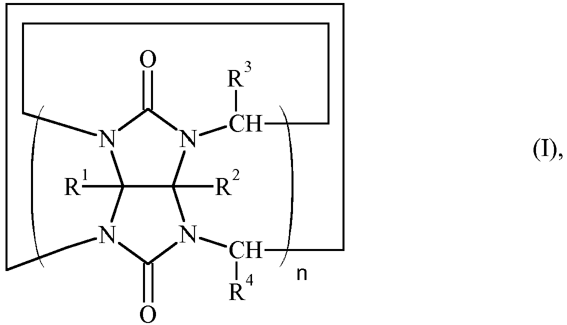 wobei
n = 7, 8, 9, 10, 11, 12, 13, 14, 15, 16, 17, 18, 19 oder 20 ist,
R¹, R², R³ und R⁴ unabhängig voneinander ausgewählt sind aus der Gruppe bestehend aus R, OH und COOR, und wobei
R für jedes Vorkommen in Formel (I) jeweils unabhängig H oder ein substituierter oder unsubstituierter cyclischer, acyclischer, linearer oder verzweigter, substituierter oder unsubstituierter, aliphatischer oder aromatischer Rest ist, und
ii. einem Farbstoff mit Bindungsaffinität zu dem Cucurbituril I unter Bildung eines chiralen supramolekularen Cucurbituril-Farbstoff-Analyt-Komplexes, und
b. Erstellens eines Circulardichroismus-Spektrums des chiralen supramolekularen Cucurbituril-Farbstoff Analyt-Komplexes.

2. Verfahren nach Anspruch 1, wobei R für jedes Vorkommen in Formel (I) jeweils unabhängig voneinander ausgewählt ist aus der Gruppe bestehend aus H, substituiertem oder unsubstituiertem C₁₋₁₀-Alkyl, substituiertem oder unsubstituiertem C₂₋₁₀-Alkenyl, substituiertem oder unsubstituiertem C₂₋₁₀-Alkinyl, substituiertem oder unsubstituiertem C₄₋₁₀-Alkeninyl, substituiertem oder unsubstituiertem C₃₋₁₂-Cycloalkyl, substituiertem oder unsubstituiertem C₃₋₁₂-Cycloalkenyl, substituiertem oder unsubstituiertem C₅₋₁₂-Cycloalkinyl, substituiertem oder unsubstituiertem C₅₋₁₂-Cycloalkeninyl, substituiertem oder unsubstituiertem C₁₋₁₀-Heteroalkyl, substituiertem oder unsubstituiertem C₂₋₁₀-Heterolkenyl, substituiertem oder unsubstituiertem C₂₋₁₀-Heteroalkinyl, substituiertem oder unsubstituiertem C₄₋₁₀-Heteroalkeninyl, substituiertem oder unsubstituiertem C₅₋₁₂-Aryl, substituiertem oder unsubstituiertem C₃₋₁₂-Heteroaryl.

3. Verfahren nach Anspruch 1 oder 2, wobei R für jedes Vorkommen in Formel (I) jeweils unabhängig voneinander ausgewählt ist aus der Gruppe bestehend aus H, substituiertem oder unsubstituiertem C₁₋₆-Alkyl, substituiertem oder unsubstituiertem C₂₋₆-Alkenyl, substituiertem oder unsubstituiertem C₂₋₆-Alkinyl, substituiertem oder unsubstituiertem C₄₋₈-Alkeninyl, substituiertem oder unsubstituiertem C₄₋₆-Cycloalkyl, substituiertem oder unsubstituiertem C₄₋₆-Cycloalkenyl, substituiertem oder unsubstituiertem C₅₋₈-Cycloalkinyl, substituiertem oder unsubstituiertem C₅₋₈-Cycloalkeninyl, substituiertem oder unsubstituiertem C₁₋₆-Heteroalkyl, substituiertem oder unsubstituiertem C₂₋₆-Heterolkenyl, substituiertem oder unsubstituiertem C₂₋₆-Heteroalkinyl, substituiertem oder unsubstituiertem C₄₋₈-Heteroalkeninyl, substituiertem oder unsubstituiertem C₅₋₁₀-Aryl, substituiertem oder unsubstituiertem C₃₋₁₀-Heteroaryl.

4. Verfahren nach einem der vorhergehenden Ansprüche, wobei R¹, R², R³ und R⁴ jeweils H sind, und n = 7, 8, 9, 10, 11, 12, 13 oder 14, bevorzugt 7, 8 oder 9, besonders bevorzugt 8 ist.

5. Verfahren nach einem der vorhergehenden Ansprüche, wobei der Farbstoff ein neutraler, dikationischer oder polykationischer Farbstoff, vorzugsweise ein dikationischer Farbstoff ist, und besonders bevorzugt ausgewählt ist aus der Gruppe bestehend aus 2,7-dimethyldiazapyrenium (MDAP), N,N'-Dimethyl-2,9-diazaperopyrenium (MDPP) und trans-4,4'-(N,N'-Dimethylpyridinium)ethylen (MVE), besonders bevorzugt MDPP.

6. Verfahren nach einem der vorhergehenden Ansprüche, wobei Schritt b) in Gegenwart eines mit dem Analyten direkt oder indirekt reagierenden Reaktanden zeitlich mehrfach hintereinander oder kontinuierlich durchgeführt und auf diese Weise eine Überwachung des Verlaufs einer Reaktion vorgenommen wird, bei der der chirale Analyt gebildet oder verbraucht wird.

7. Verfahren nach einem der Ansprüche 1 bis 6, wobei der chirale Analyt in einer Probe enhalten ist, die aus einer Reaktionslösung entnommen wird, in der eine Reaktion stattfindet, bei der der chirale Analyt gebildet oder verbraucht wird, und wobei die Schritte a) und b) zeitlich mehrfach hintereinander durchgeführt werden und auf diese Weise eine Überwachung des Verlaufs der Reaktion vorgenommen wird.

8. Verfahren nach einem der vorhergehenden Ansprüche, wobei der Analyt ein Enantiomer in einem Enantiomerengemisch ist.

9. Verfahren nach einem der vorhergehenden Ansprüche, wobei der achirale supramolekulare Cucurbituril-Farbstoff-Komplex auf einer Oberfläche immobilisiert ist.

10. Verfahren zur Sequenzbestimmung eines Proteins, wobei das Protein in Peptide und/oder einzelne Aminosäuren gespalten wird und die Peptide und/oder Aminosäuren nach einem Verfahren gemäß einem der Ansprüche 1-9 detektiert werden.

11. Verfahren nach Anspruch 10, wobei die Peptide und/oder Aminosäuren vor der Anwendung eines Detektionsverfahrens nach einem der Ansprüche 1-9 getrennt werden.

## Claims

1. A method for detecting a chiral analyte, wherein the chiral analyte is an aromatic compound or comprises an aromatic group, comprising the steps of:
a. bringing the chiral analyte, in an aqueous solution, in contact with an achiral supramolecular host guest complex consisting of
i. a cucurbituril according to formula I 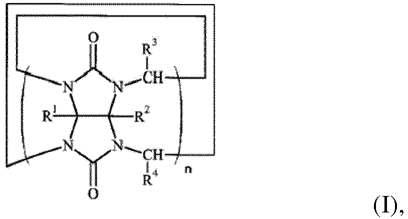 wherein
n=7, 8, 9, 10, 11, 12, 13, 14, 15, 16, 17, 18, 19 or 20,
R¹, R², R³ and R⁴ are selected, independently from each other, from the group comprising R, OH and COOR and wherein for every occurrence in formula (I), R respectively independently represents H or a substituted or unsubstituted cyclic, acyclic, linear or branched, substituted or unsubstituted, aliphatic or aromatic group, and
ii. a dye with a binding affinity with the cucurbituril I , thus forming a chiral supramolecular cucurbituril-dye-analyte-complex, and
b. generating a circular dichroism spectrum of the chiral supramolecular cucurbituril-dye-analyte-complex.

2. The method according to claim 1, wherein for each occurrence in formula (I), R is respectively independently selected from the group consisting of H, substituted C₁₋₁₀-Alkyl, substituted or unsubstituted C₂₋₁₀-Alkenyl, substituted or unsubstituted C₂₋₁₀-Alkynyl, substituted or unsubstituted C₄₋₁₀-Alkeninyl, substituted or unsubstituted C₃₋₁₂-Cycloalkyl, substituted or unsubstituted C₃₋₁₂-Cycloalkenyl, substituted or unsubstituted C₅₋₁₂-Cycloalkynyl, substituted or unsubstituted C₅₋₁₂-Cycloalkeninyl, substituted or unsubstituted C₁₋₁₀-Heteroalkyl, substituted or unsubstituted C₂₋₁₀-Heteroalkenyl, substituted or unsubstituted C₂₋₁₀-Heteroalkynyl, substituted or unsubstituted C₄₋₁₀-Heteroalkenynyl, substituted or unsubstituted C₅₋₁₂-Aryl, substituted or unsubstituted C₃₋₁₂-Heteroaryl.

3. The method according to claim 1 or 2, wherein for each occurrence in formula (I), R is respectively independently selected from the group comprising H, substituted or unsubstituted C₁₋₆-Alkyl, substituted or unsubstituted C₂₋₆-Alkenyl, substituted or unsubstituted C₂₋₆-Alkynyl, substituted or unsubstituted C₄₋₈-Alkeninyl, substituted or unsubstituted C₄₋₆-Cycloalkyl, substituted or unsubstituted C₄₋₆-Cycloalkenyl, substituted or unsubstituted C₅₋₈-Cycloalkynyl, substituted or unsubstituted C₅₋₈-Cycloalkeninyl, substituted or unsubstituted C₁₋₆-Heteroalkyl, substituted or unsubstituted C₂₋₆-Heteroalkenyl, substituted or unsubstituted C₂₋₆-Heteroalkynyl, substituted or unsubstituted C₄₋₈-Heteroalkenynyl, substituted or unsubstituted C₅₋₁₀-Aryl, substituted or unsubstituted C₃₋₁₀-Heteroaryl.

4. The method according to one of the afore-mentioned claims, wherein R¹, _{R}², R³ and R⁴ are respectively H and n = 7, 8, 9, 10, 11, 12, 13 or 14, preferably 7, 8 or 9, particularly preferably 8.

5. The method according to one of the afore-mentioned claims, wherein the dye is a neutral, dicationic or polycationic dye, preferably a dicationic dye and is particularly preferably selected from the group comprising 2,7-dimethyldiazapyrenium (MDAP), N,N'-dimethyl-2,9-diazaperopyrenium (MDPP) and trans-4,4'-(N,N'-dimethylpyridinium)ethylene (MVE), particularly preferably MDPP.

6. The method according to one of the afore-mentioned claims, wherein step b) is chronologically successively repeated or continuously performed in the presence of a reactant reacting directly or indirectly with the analyte, so that a surveillance of the progression of a reaction is performed, during which the chiral analyte is formed or consumed.

7. The method according to one of the claims 1 to 6, wherein the chiral analyte is contained in a sample that is taken from a reaction solution, in which a reaction takes place, during which the chiral analyte is formed or consumed, and wherein steps a) and b) are chronologically successively repeated, so that a surveillance of the progression of the reaction is performed.

8. The method according to one of the afore-mentioned claims, wherein the analyte is an enantiomer in an enantiomeric mixture.

9. The method according to one of the afore-mentioned claims, wherein the achiral supramolecular cucurbituril-dye complex is immobilized on a surface.

10. A method for sequencing a protein, wherein the protein is divided into peptides and/or single amino acids and the peptides and/or amino acids are detected according to a method according to one of the claims 1-9.

11. The method according to claim 10, wherein the peptides and/or amino acids are separated before applying a detection method according to one of the claims 1-9.

## Revendications

1. Procédé pour détecter un analyte chiral, où l'analyte chiral est un composé aromatique ou comprend un groupe aromatique, comprenant les étapes consistant à :
a. mettre l'analyte chiral, dans une solution aqueuse, en contact avec un complexe d'inclusion supramoléculaire achiral composé
i. d'un cucurbiturile selon la formule I 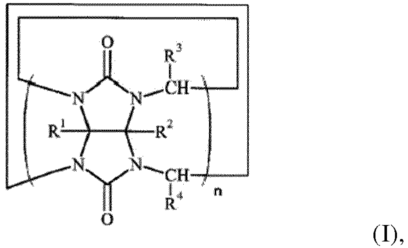 où
n=7, 8, 9, 10, 11, 12, 13, 14, 15, 16, 17, 18, 19 ou 20,
R¹, R², R³ et R⁴ sont indépendamment choisis parmi le groupe comprenant R, OH et COOR, et où pour chacune de ses occurrences dans la formule (I), R est respectivement indépendamment H ou un groupe cyclique, acyclique, linéaire ou ramifié substitué ou non substitué, aliphatique ou aromatique substitué ou non substitué, et
ii. d'un colorant avec une affinité de liaison avec le cucurbiturile I formant ainsi un complexe cucurbiturile-colorant-analyte supramoléculaire chiral, et
b. générer un spectre de dichroïsme circulaire du complexe cucurbiturile-colorant-analyte supramoléculaire chiral.

2. Procédé selon la revendication 1, où pour chacune de ses occurrences dans la formule (I), R est respectivement indépendamment choisi parmi le groupe comprenant H, de l'alkyle en C₁₋₁₀ substitué ou non substitué, de l'alkényle en C₂₋₁₀ substitué ou non substitué, de l'alkynyle en C₂₋₁₀ substitué ou non substitué, de l'alkénynyle en C₄₋₁₀ substitué ou non substitué, du cycloalkyle en C₃₋₁₂ substitué ou non substitué, du cycloalkényle en C₃₋₁₂ substitué ou non substitué, du cycloalkynyle en C₅₋₁₂ substitué ou non substitué, du cycloalkénynyle en C₅₋₁₂ substitué ou non substitué, de l'hétéroalkyle en C₁₋₁₀ substitué ou non substitué, de l'hétéroalkényle en C₂₋₁₀ substitué ou non substitué, de l'hétéroalkynyle en C₂₋₁₀ substitué ou non substitué, de l'hétéroalkénynyle en C₄₋₁₀ substitué ou non substitué, de l'aryle en C₅₋₁₂ substitué ou non substitué, de l'hétéroaryle en C₃₋₁₂ substitué ou non substitué.

3. Procédé selon la revendication 1 ou 2, où pour chacune de ses occurrences dans la formule (I), R est respectivement indépendamment choisi parmi le groupe comprenant H, de l'alkyle en C₁₋₆ substitué ou non substitué, de l'alkényle en C₂₋₆ substitué ou non substitué, de l'alkynyle en C₂₋₆ substitué ou non substitué, de l'alkénynyle en C₄₋₈ substitué ou non substitué, du cycloalkyle en C₄₋₆ substitué ou non substitué, du cycloalkényle en C₄₋₆ substitué ou non substitué, du cycloalkynyle en C₅₋₈ substitué ou non substitué, du cycloalkénynyle en C₅₋₈ substitué ou non substitué, de l'hétéroalkyle en C₁₋₆ substitué ou non substitué, de l'hétéroalkényle en C₂₋₁₀ substitué ou non substitué, de l'hétéroalkynyle en C₂₋₆ substitué ou non substitué, de l'hétéroalkénynyle en C₄₋₈ substitué ou non substitué, de l'aryle en C₅₋₁₀ substitué ou non substitué, de l'hétéroaryle en C₃₋₁₀ substitué ou non substitué.

4. Procédé selon l'une des revendications précédentes, où R¹, R², R³ et R⁴ sont respectivement H, et n=7, 8, 9, 10, 11, 12, 13 ou 14, de préférence 7, 8 ou 9, particulièrement préférablement 8.

5. Procédé selon l'une des revendications précédentes, où le colorant est un colorant neutre, dicationique ou polycationique, de préférence un colorant dicationique et est particulièrement préférablement choisi parmi le groupe comprenant le 2,7-diméthyldiazapyrenium (MDAP), le N,N'-diméthyle-2,9-diazaperopyrénium (MDPP) et le trans-4,4'-(N,N'-diméthylpyridinium)éthylène (MVE), particulièrement préférablement du MDPP.

6. Procédé selon l'une des revendications précédentes, où l'étape b) est répétée de manière chronologiquement successive ou exécutée en continu en présence d'un réactif réagissant directement ou indirectement avec l'analyte et une surveillance de la progression d'une réaction, lors de laquelle l'analyte chiral est formé ou consommé, est ainsi réalisée.

7. Procédé selon l'une des revendications 1 à 6, où l'analyte chiral est contenu dans un échantillon prélevé dans une solution réactionnelle dans laquelle se produit une réaction lors de laquelle l'analyte chiral est formé ou consommé, et où les étapes a) et b) sont répétées de manière chronologiquement successive et une surveillance de la progression de la réaction est ainsi réalisée.

8. Procédé selon l'une des revendications précédentes, où l'analyte est un énantiomère dans un mélange d'énantiomères.

9. Procédé selon l'une des revendications précédentes, où le complexe cucurbiturile-colorant supramoléculaire achiral est immobilisé sur une surface.

10. Procédé de séquençage d'une protéine, où la protéine est divisée en peptides et/ou en acides aminés individuels et les peptides et/ou acides aminés sont détectés selon un procédé selon l'une des revendications 1-9.

11. Procédé selon la revendication 10, où les peptides et/ou acides aminés sont séparés avant l'application d'un procédé de détection selon l'une des revendications 1-9.
